(19) Europäisches Patentamt
European Patent Office
Office européen des brevets

(11) Veröffentlichungsnummer: **0 618 867 B1**

(12) **EUROPÄISCHE PATENTSCHRIFT**

(45) Veröffentlichungstag der Patentschrift: **15.11.95**

(51) Int. Cl.⁶: **B60T 8/00**

(21) Anmeldenummer: **93901734.9**

(22) Anmeldetag: **04.01.93**

(86) Internationale Anmeldenummer:
**PCT/EP93/00003**

(87) Internationale Veröffentlichungsnummer:
**WO 93/12959 (08.07.93 93/16)**

(54) **BREMSANLAGE MIT EINSTELLBAR VERÄNDERBARER VORDERACHS-/HINTERACHS-BREMSKRAFTVERTEILUNG.**

(30) Priorität: **03.01.92 DE 4200046**

(43) Veröffentlichungstag der Anmeldung:
**12.10.94 Patentblatt 94/41**

(45) Bekanntmachung des Hinweises auf die Patenterteilung:
**15.11.95 Patentblatt 95/46**

(84) Benannte Vertragsstaaten:
**DE GB**

(56) Entgegenhaltungen:
**EP-A- 0 393 375**
**DE-C- 3 941 409**
**GB-A- 2 156 461**
**GB-A- 2 237 612**
**US-A- 4 613 190**

**BURCKHARDT,M 'Fahrwerktechnik: Bremsdynamik und Pkw-Bremsanlagen.' 1991 ,JöRNSEN REIMPELL - VOGEL VERLAG , WüRZBURG, DE**

(73) Patentinhaber: **MERCEDES-BENZ AG**
**Mercedesstrasse 136**
**D-70327 Stuttgart (DE)**

(72) Erfinder: **BURCKHARDT, Manfred**
**Alte Winnender Steige 23**
**D-7050 Waiblingen (DE)**
Erfinder: **KAZAN, Sinan**
**Frühlingshalde 1**
**D-7300 Esslingen (DE)**
Erfinder: **ZIMMER, Richard**
**Robert-Bosch-Strasse 17**
**D-7012 Fellbach (DE)**

**Beschreibung**

Die Erfindung betrifft eine Bremsanlage mit einstellbar veränderbarer Vorderachs-/Hinterachs-Bremskraftverteilung für ein auf hohe Geschwindigkeiten ausgelegtes Fahrzeug, insbesondere ein Rennfahrzeug, gemäß dem Oberbegriff des Patentanspruchs 1.

Bei den hohen Geschwindigkeiten von 350 km/h und mehr, die von Rennfahrzeugen auf Hochgeschwindigkeitskursen erreichbar sind, sowie bei den für solche Fahrzeuge, die meist einen Hinterachsantrieb haben, vorgesehenen aerodynamischen Gestaltungen der Karosserien treten infolge der mit zunehmender Fahrzeuggeschwindigkeit quadratisch anwachsenden Luft-Abtriebskräfte sowohl an der Vorderachse wie auch an der Hinterachse drastische Achslast-Erhöhungen auf, die, dem Betrage nach, insgesamt einem Mehrfachen, z.B. dem Zwei- bis Drei-fachen des Fahrzeuggewichtes bei stehendem Fahrzeug entsprechen können. Hierbei ergibt sich für die möglichen Konstruktionen, daß mit zunehmender Fahrzeuggeschwindigkeit v die an der Hinterachse wirksamen Luft-Abtriebskräfte stärker anwachsen als die an der Vorderachse wirksamen Luft-Abtriebskräfte, was allerdings dazu führt, daß eine z.B. im Sinne einer Festabstimmung der Bremskraft-Verteilung ausgelegte Bremsanlage nur für einen engen Geschwindigkeitsbereich optimal ausgelegt sein kann und außerhalb dieses Geschwindigkeitsbereiches entweder mit der Gefahr eines instabilen dynamischen Bremsverhaltens des Fahrzeuges oder dem Nachteil einer für eine vorgegebene Betätigungskraft relativ niedrigen Bremsverzögerung behaftet ist.

Dieser Nachteil kann zwar durch ein Antiblockiersystem gemildert werden, das mit einer geschwindigkeits-abhängigen Veränderung der Ansprechschwellen sowohl an der Vorderachse als auch an der Hinterachse arbeitet (DE 39 35 834 C2). Dadurch jedoch, daß die Grundabstimmung der Bremsanlage auf stabiles Bremsverhalten ohne Einfluß der Luftkräfte getroffen sein muß, wodurch der Bremsenkennwert $B^*_H$ der Hinterachse zwangsläufig relativ niedrig gehalten sein muß, ist bei einem Ansprechen des Antiblockiersystems im Hochgeschwindigkeitsbereich an der Vorderachse eine unverhältnismäßig hohe Drucksteigerung notwendig, um auch an den Hinterradbremsen ein Ansprechen der Regelung zu erzwingen. Der für eine solche Drucksteigerung erforderliche Kraftaufwand, einerseits, sowie auch die Zeit die verstreicht, bis der Druckaufbau erreicht ist, begrenzen jedoch die Wirksamkeit eines Antiblockiersystems bei Renneinsätzen und führen im Ergebnis zu Zeitverzögerungen beim Bremskraftaufbau, der im Ergebnis im Rennen zu unannehmbaren Zeitverlusten führt.

Andererseits werden bei Rennfahrzeugen auch Twin-Hauptzylinder benutzt, bei denen den Vorderradbremsen und den Hinterradbremsen zugeordnete "Einkreis"-Hauptzylinder über eine Wippe mit veränderlichem Kraft-Angriffspunkt betätigbar sind, wobei die günstigste Positions-Einstellung des Kraft-Angriffspunktes für jede Geschwindigkeit eine andere ist. In Kombination mit Twin-Hauptzylindern sind auch selbsttätig arbeitende Verstellvorrichtungen für den Kraftangriffspunkt der Wippe bekannt, die im Prinzip auch eine geschwindigkeitsabhängige Veränderung der Bremskraft-Verteilung ermöglichen würden. Derartige Verstellvorrichtungen haben jedoch den Nachteil, daß auf das den Angriffspunkt markierende Gelenkstück im Bremsbetrieb sehr hohe Kräfte wirken, wodurch die Verstellbarkeit zwangsläufig mit einer Hysterese behaftet ist und erhebliche Verstell-Zeiten in Kauf genommen werden müssen, mit der Folge, daß eine exakte Einstellung der optimalen Bremskraftverteilung praktisch nicht möglich ist. Wohl aus diesem Grund sind selbständig arbeitende Verstelleinrichtungen der geschilderten Art im Rennbetrieb bislang nicht eingesetzt worden sondern allenfalls solche, die "von Hand" auf die statistisch wichtigste Situation eingestellt werden konnten.

Aufgabe der Erfindung ist es daher, eine Bremsanlage der eingangs genannten Art dahingehend zu verbessern, daß sie bei gleichwohl einfachem und für einen Einsatz im Rennfahrzeug geeigneten funktionssicheren Aufbau eine rasche bedarfsgerechte Einstellung einer optimierten Bremskraftverteilung ermöglicht.

Diese Aufgabe wird gemäß den kennzeichnenden Merkmalen des Patentanspruchs 1 dem Grundgedanken nach dadurch gelöst, daß zusätzlich zu einem Bremsgerät eine weitere Bremsdruckquelle vorgesehen ist, deren Ausgangsdruck elektronisch steuerbar ist, derart, daß sich im gesamten, in Betracht zu ziehenden Geschwindigkeitsbereich eine der idealen oder nahezu der idealen Bremskraftverteilung entsprechende Verteilung der mittels der Vorderrad- und der Hinterradbremsen ausübbaren Bremskräfte und, bezogen auf die Betätigungskraft, die der Fahrer bei einer Bremsung aufbringen muß, höchstmögliche Fahrzeugverzögerung ergibt. Da der zur Steuerung des Ausgangsdruckes der zusätzlichen Bremsdruckquelle erfindungsgemäß ausgenutzte Algorithmus, der auf der Bedingung Gleichheit der Blockiergrenze an den Vorderrädern und den Hinterrädern basiert und einer näherungsweisen numerischen Auswertung dieser Beziehung entspricht, elektronisch sehr schnell auswertbar ist, ist auch eine rasche Nachführung des Hinterachs-Bremsdruckes in Relation zum Vorderachs-Bremsdruck unter Berücksichtigung der jeweiligen Fahrzeuggeschwindigkeit möglich. Die Einkopplung des Ausgangsdruckes der Bremsdruckquelle in die mit diesem zu beaufschlagenden Kolbenpaare der Bremssättel der Hinterradbremsen ist mit einfachen konstruktiven Mitteln möglich, ohne daß hierfür eine aufwendige Gestaltung des Bremsgeräts erforderlich wäre. Dies gilt insbesondere dann, wenn, wie gemäß Anspruch 2 vorgesehen, die Hinterradbremsen ausschließlich mit dem Ausgangsdruck der steuerbaren Druckquelle beaufschlagbar sind, in welchem Falle lediglich der in die Vorderradbremsen einzukoppelnde Bremsdruck mittels des Bremsgeräts erzeugt werden muß, das demzufolge als einfacher "Einkreis"-Hauptzylinder ausgebildet sein kann, gegebenenfalls auch als Tandem-Hauptzylinder, an dessen Ausgangsdruckräume je eine der Vorderradbremsen angeschlossen ist.

Bei der gemäß Anspruch 3 vorgesehenen Gestaltung der Bremsanlage, bei der die Hinterradbremsen Vier-Kolben-Sättel haben, wobei der Ausgangsdruck der steuerbaren Bremsdruckquelle an jeweils nur eines dieser Kolbenpaare angekoppelt wird, kann die zusätzliche Bremsdruckquelle auf ein niedrigeres Ausgangsdruckniveau ausgelegt sein, und es ist auch erhöhte Sicherheit gegen einen Ausfall der zusätzlichen Druckquelle gegeben, da die mittels des Bremsgeräts mit Bremsdruck beaufschlagbaren Kolbenpaare der Hinterrad-Bremssättel auch bei einem Ausfall der zusätzlichen Bremsdruckquelle funktionsfähig bleiben.

Die dem Grundgedanken nach durch die Merkmale des Anspruchs 4 vermittelte Lösung der der Erfindung zugrundeliegenden Aufgabe mit Hilfe eines dahingehend modifizierten Tandem-Hauptzylinders, daß dieser einen Steuerdruckraum hat, durch dessen Beaufschlagung mit dem Ausgangsdruck der steuerbaren Druckquelle die der optimierten Bremskraftverteilung entsprechende Bremsdruck-Entfaltung in den Hinterradbremsen in Relation zu dem Bremsdruck in den Vorderradbremsen erzielbar ist, hat den Vorteil einer einfachen Leitungsführung der für die Vorderradbremsen und die Hinterradbremsen benötigten Bremsleitungen, wobei die Konstruktion der Bremssättel beliebig sein kann.

In Kombination hiermit ist durch die Merkmale des Anspruchs 5 eine konstruktiv einfache Gestaltung des Tandem-Hauptzylinders mit Steuerdruckraum angegeben, bei dessen weiterer Ausgestaltung gemäß den Ansprüchen 6 und 7 eine Rückwirkung des zur Druckmodulation des Hinterachs-Bremsdruckes ausgenutzten Steuerdruckes auf den Vorderachs-Bremskreis vermieden wird.

Durch die gemäß Anspruch 8 vorgesehene Auslegung der Bremsanlage ist gewährleistet, daß das Fahrzeug auch bei einem Ausfall der zusätzlichen Bremsdruck- oder Steuerdruckquelle dynamisch stabil gebremst werden kann.

Durch die Merkmale der Ansprüche 9 und 10 sind Gestaltungen der steuerbaren Druckquelle angegeben, die mit einfachen steuerungstechnischen Mitteln eine feinfühlige stetige oder quasi-stetige Einstellung bzw. Nachführung des in die Hinterradbremsen eingekoppelten Bremsdruckes ermöglichen.

Die für die zweckgerechte Steuerung der mittels der Hinterradbremsen zu entfaltenden Bremskraft erforderliche Kenntnis der mittels der Vorderradbremsen entfalteten Bremskraft ist auf einfache Weise gemäß Anspruch 11 mittels eines dem Vorderachs-Bremskreis zugeordneten Druckgebers oder eines die Stellung des Bremspedals erfassenden Positionsgebers gewinnbar, wobei der Druckgeber den Vorteil einer genaueren Bestimmbarkeit der interessierenden Meßgröße hat, jedoch eine zusätzliche Dichtungs-Stelle im hydraulischen Leitungssystem erfordert, während der Positionsgeber "außerhalb" des Leitungssystems angeordnet werden kann und daher den Vorteil einer geringeren Störanfälligkeit der Bremsanlage erbringt.

Wenn, wie gemäß Anspruch 11 vorgesehen, zur Istwert-Erfassung des in die Hinterradbremsen eingekoppelten Druckes ein Druckgeber vorhanden ist, der zweckmäßigerweise unmittelbar an den Druckausgang der steuerbaren Druckquelle angeschlossen ist, so ist eine Nachführung der Hinterachs-Bremskraft in der zur Vorderachs-Bremskraft vorgesehenen Relation im Sinne einer Nachlaufregelung möglich, die eine besonders gute Einhaltung des jeweils günstigsten Bremskraft-Verteilungsverhältnisses erbringt.

Eine für eine optimierte Bremskraft-Verteilungs-Steuerung erwünschte Kenntnis der zwischen der Fahrbahn und den gebremsten Fahrzeugrädern jeweils wirksamen Beträge des Kraftschlußbeiwertes $\mu_B$ ist gemäß Anspruch 13 auf einfache Weise aus dem dynamischen Beschleunigungsverhalten des Fahrzeuges gewinnbar und/oder, wie durch den Anspruch 14 angegeben, aus dem Verzögerungsverhalten des Fahrzeuges, wenn bei einer Bremsung an sämtlichen Fahrzeugrädern die Antiblockierregelung wirksam wird.

Für diese beiden Arten der Kraftschlußbeiwert-Erfassung ist es vorteilhaft, wenn das Fahrzeug entsprechend Anspruch 15 mit einem Längsbeschleunigungssensor ausgerüstet ist, der für die am Fahrzeug auftretenden Beschleunigungen und/oder Verzögerungen charakteristische elektrische Ausgangssignale erzeugt, die zur Berechnung des Sollwertes der jeweils günstigsten Bremskraftverteilung ausgenutzt werden können.

Die Erfindung wird nachfolgend anhand in der Zeichnung dargestellter Ausführungsbeispiele näher erläutert. Es zeigen:

Fig. 1      ein erstes Ausführungsbeispiel einer erfindungsgemäßen Bremsanlage mit einer elektronisch steuerbaren Druckquelle zur Erzielung einer optimierten Vorderachs-/Hinterachs-Bremskraftverteilung, in schematisch vereinfachter Blockschaltbilddarstellung,

Fig. 2a und 2b      Diagramme zur Erläuterung der Funktion der Bremsanlage gemäß Fig. 1,

Fig. 3a und 3b      mögliche Gestaltungen im Rahmen der Bremsanlage gemäß Fig. 1 einsetzbarer elektronisch steuerbarer Druckquellen,

Fig. 4 ein funktionell der Bremsanlage gemäß Fig. 1 entsprechendes Ausführungsbeispiel der Bremsanlage mit ausschließlich mit dem Ausgangsdruck der steuerbaren Druckquelle beaufschlagbaren Hinterradbremsen, in einer der Fig. 1 entsprechenden Darstellung,

Fig. 5 ein weiteres Ausführungsbeispiel einer funktionell der Bremsanlage gemäß Fig. 1 entsprechenden Bremsanlage mit auf verschiedene Bremskraft-Verteilungen einstellbarem Tandem-Hauptzylinder, letzteren im Längsschnitt,

Fig. 5a Einzelheiten des Hauptzylinders gemäß Fig. 5 in vergrößerter Schnittdarstellung und

Fig. 6 ein weiteres Diagramm zur Erläuterung einer möglichen Auslegung der Bremsanlagen gemäß den Fig. 1, 4 und 5.

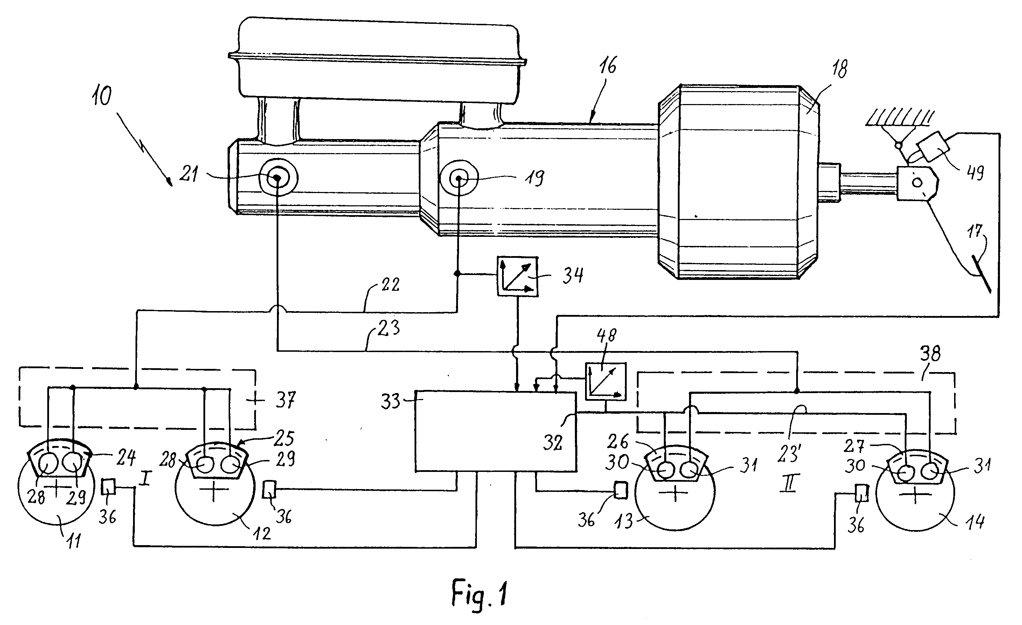

Durch die in der Fig. 1 dargestellte, insgesamt mit 10 bezeichnete hydraulische Zweikreis-Bremsanlage ist ein Straßenfahrzeug repräsentiert, das auf extrem hohe Geschwindigkeiten von deutlich über 300 km/h ausgelegt ist und auch mit sehr hohen Fahrzeugverzögerungen bremsbar sein soll, insbesondere ein Rennfahrzeug, bei dem aufgrund seiner aerodynamischen Gestaltung bei hohen Geschwindigkeiten eine deutliche Erhöhung sowohl der Vorderachslast als auch der Hinterachslast resultiert, wobei diese Achslast-Erhöhungen möglichst effektiv zur Erzielumg möglichst hoher Fahrzeugverzögerungen bei einem Bremsvorgang ausgenutzt werden sollen.

Bei der Bremsanlage 10 sind die Vorderradbremsen 11 und 12 zu einem Vorderachs-Bremskreis I und die Hinterradbremsen 13 und 14 zu einem Hinterachs-Bremskreis II zusammengefaßt.

Als Bremsgerät 16 der Bremsanlage 10 ist ein mittels eines Bremspedals 17 über einen Bremskraftverstärker 18, der als hydraulischer oder als pneumatischer Bremskraftverstärker ausgebildet sein kann, betätigbarer Tandem-Hauptzylinder für sich bekannter Bauart vorgesehen, der einen dem Vorderachs-Bremskreis I zugeordneten Druckausgang 19 und einem dem Hinterachs-Bremskreis II zugeordneten Druckausgang 21 hat, an die zu den Vorderradbremsen 11 und 12 bzw. den Hinterradbremsen 13 und 14 hin sich verzweigende Hauptbremsleitungen 22 bzw. 23 angeschlossen sind, über welche in einem Primär-Ausgangsdruckraum und einem Sekundär-Ausgangsdruckraum des Tandem-Hauptsenders 16 durch dessen Betätigung erzeugte Ausgangsdrücke in die Vorderradbremsen 11 und 12 und die Hinterradbremsen 13 und 14 als Bremsdrücke einkoppelbar sind.

Für die jeweils als Scheibenbremsen ausgebildeten Vorderradbremsen 11 und 12 und Hinterradbremsen 13 und 14 ist vorausgesetzt, daß deren Bremssättel 24 und 25 sowie 26 und 27 als sogenannte Vier-Kolben-Sättel ausgebildet sind, die je zwei Kolbenpaare 28 und 29 bzw. 30 und 31 haben, wobei die Bremssättel 24 und 25 der Vorderradbremsen 11 und 12 untereinander identisch ausgelegt sind und auch die Bremssättel 26 und 27 jeweils dieselbe Auslegung haben, die Kolbenpaare 28 und 29 der Bremssättel 24 und 25 der Vorderradbremsen und die Kolbenpaare 30 und 31 der Bremssättel 26 und 37 jedoch verschieden dimensioniert sind.

Im Unterschied zum Vorderachs-Bremskreis I, bei dem sämtliche Kolbenpaare 28 und 29 der Bremssättel 24 und 25 der Vorderradbremsen 11 und 12 an die Hauptbremsleitung 22 des Vorderachs-Bremskreises I angeschlossen und damit bei einer Betätigung der Bremsanlage 10 mit demselben Bremsdruck beaufschlagt sind, der am Druck ausgang 19 des Bremsgeräts 16 abgegeben wird, ist jeweils nur eines der Kolbenpaare, z.B. das Kolbenpaar 31 der Bremssättel 26 und 27 der beiden Hinterradbremsen 13 und 14 an die vom Druckausgang 21 des Bremsgeräts 16 ausgehende Hauptbremsleitung 23 des Hinterachs-Bremskreises I angeschlossen, während die beiden anderen Kolbenpaare 30 der Bremssättel 26 und 27 der Hinterradbremsen 13 und 14 gemeinsam an den Druckausgang 32 einer elektronisch steuerbaren Bremsdruckquelle 33 angeschlossen und mit deren Ausgangsdruck beaufschlagbar sind. Der Ausgangsdruck dieser zusätzlichen Bremsdruckquelle 33 wird in Relation zu dem in die Vorderradbremsen 11 und 12 eingekoppelten Bremsdruck $p_V$, zu dessen Überwachung ein elektromechanischer oder elektronischer Druckgeber 34 vorgesehen ist, der ein zu dem am Druckausgang 19 des Bremsgeräts 16 abgegebenen Bremsdruck proportionales Ausgangssignal erzeugt, das einer in der Fig. 1 nicht eigens dargestellten elektronischen Steuereinheit der Bremsdruckquelle 33 zugeleitet ist, sowie in Abhängigkeit von der Fahrzeuggeschwindigkeit v derart geregelt, daß sich im Hinblick auf die Erreichbarkeit möglichst hoher Fahrzeugverzögerungen bei vorgegebener Pedalbetätigungskraft eine günstige Vorderachs-/Hinterachs-Bremskraftverteilung ergibt, die zumindest sehr gut an diejenige - ideale - Bremskraftverteilung angenähert ist, die gleicher Kraftschlußausnutzung an den Vorderrädern und den Hinterrädern des Fahrzeuges entspricht.

Zur Ermittlung des genauen Wertes der Fahrzeuggeschwindigkeit v werden bei dem zur Erläuterung gewählten Ausführungsbeispiel Ausgangssignale den Fahrzeugrädern einzeln zugeordneter Raddrehzahlsensoren 36 ausgenutzt, die im Rahmen eines Antiblockiersystems, mit dem das Fahrzeug ebenfalls ausgerüstet ist, zur Ermittlung der Radumfangsgeschwindigkeiten vorgesehen sind aus deren vergleichender und differenzierender Verarbeitung auch der Bremsschlupf und die Radverzögerungen ermittelbar sind.

Dieses Antiblockiersystem, das nach Aufbau und Funktion als bekannt vorausgesetzt werden kann und z.B. als ein nach dem Rückförderprinzip arbeitendes Antiblockiersystem ausgebildet ist, ist im übrigen in der Fig. 1 lediglich durch schematisch angedeutete, dem Vorderachs-Bremskreis I und dem Hinterachs-Bremskreis II zugeordnete hydraulische Bremsdruck-Steuereinheiten 37 und 38 repräsentiert, welche in üblicher Gestaltung ihrerseits den Vorderradbremsen 11 und 12 sowie den Hinterradbremsen 13 und 14 einzeln oder gemeinsam zugeordnete Bremsdruck-Regelventile enthalten.

Die Bremssättel 24 und 25 der Vorderradbremsen 11 und 12, deren Kolbenpaare 28 und 29 bei einer Bremsung gemeinsam mit dem am Primär-Druckausgang 19 des Bremsgeräts 16 abgegebenen Bremsdruck $p_V$ beaufschlagt sind und die gemeinsam mit dem am Sekundär-Druckausgang 21 des Bremsgeräts 16 abgegebenen Ausgangsdruck $p_H$ beaufschlagten Kolbenpaare 31 der Hinterradbremse sind so ausgelegt, daß die hieraus resultierende Hinterachs-/Vorderachs-Bremskraftverteilung im gesamten Bereich der in Frage kommenden Fahrzeugverzögerungen bis hin zur kritischen Abbremsung $Z_{krit}$ ein dynamisch-stabiles Verzögerungsverhalten des Fahrzeuges ergibt, d.h. bei einer Bremsung stets die Vorderräder "vor" den Hinterrädern an die Blockiergrenze gelangen, während bei der kritischen Abbremsung, bei der gleiche Kraftschluß-Ausnutzung an den Vorder- wie den Hinterrädern gegeben ist, diese gleichzeitig blockieren. Stabiles Bremsverhalten eines Fahrzeugs im gesamten Bremsbereich - Teil- und Vollbremsbereich - wird somit dann erreicht, wenn, wie üblich, die kritische Abbremsung gleich dem nach der Beschaffenheit der Fahrzeugreifen höchstmöglichen Kraftschlußbeiwert $\mu_B$ gewählt wird, der unter Fahrbahnverhältnissen - trockener, griffiger Straße - ausnutzbar ist, so daß gilt:

$$Z_{krit} = \mu_B \qquad (1)$$

Andererseits gilt für die kritische Abbremsung allgemein die Beziehung:

$$Z_{krit} = \frac{\psi - \phi}{\chi} \qquad (2),$$

worin mit $\psi$ der Hinterachslastanteil, mit $\phi$ der Hinterachs-Bremskraftanteil und mit $\chi$ die radstandsbezogene Schwerpunktshöhe bezeichnet sind, welche ihrerseits durch die Beziehung

$$\chi = h/l$$

genügt, in welcher h die Schwerpunktshöhe des Fahrzeuges und l dessen Achsabstand bezeichnen.

Aus der Beziehung (2) folgt - ohne Berücksichtigung aerodynamischer Einflüsse - für den Hinterachs-Bremskraftanteil $\phi$ unmittelbar die Beziehung

$$\phi = \psi - Z_{krit} \cdot \chi = \psi - \mu_B \cdot \chi \qquad (3)$$

Nach Burkhardt/Burg ("Berechnung und Rekonstruktion des Bremsverhaltens von PKW", Seite 75, Verlag Information Ambs GmbH, 1988) gelten für den Blockierpunkt $Z_{blv}^*$ an der Vorderachse und den Blockierpunkt $Z_{blh}^*$ an der Hinterachse unter Einfluß der Luftauftriebs- bzw. abtriebskräfte die Beziehungen:

$$Z_{blv}^* = \frac{\mu_B \cdot [1 - \psi - (K_{a,v}/G_g) \cdot v^2]}{1 - \mu_{Bv} \cdot \chi - \phi} \qquad (4)$$

$$Z_{blh}^* = \frac{\mu_B \cdot [\psi - (K_{a,h}/G_g) \cdot v^2]}{\mu_{Bh} \cdot \chi + \phi} \qquad (5)$$

In diesen Beziehungen (4) und (5) ist mit $G_g$ das Fahrezuggesamtgewicht bezeichnet, während mit $K_{a,v}$ und $K_{a,h}$ die Beiwerte für die sich je nach der Gestaltung der Karosserie als Auf- oder Abtriebskräfte auswirkenden Luftkräfte bezeichnet sind, die quadratisch von der Fahrzeuggeschwindigkeit v abhängen.

Davon ausgehend, daß eine optimale Abbremsung eines Fahrzeuges dann gegeben ist, wenn gilt:

$$Z^{*}_{blv} = Z^{*}_{blh} \qquad (6),$$

d.h. die Blockiergrenze $Z_{blv}$ an der Vorderachse gleich derjenigen an der Hinterachse ist, so ergibt sich unter der Nebenbedingung, daß

$$\mu_{B,v} = \mu_{B,h} = \mu_B \qquad (7),$$

d.h. die an der Vorderachse und der Hinterachse des Fahrzeuges ausnutzbaren Kraftschlußbeiwerte gleich sind, aus den Beziehungen (4) und (5) für einen optimalen Hinterachsbremskraftanteil $\phi_{om}$ unter Berücksichtigung der Luft-Kräfte die Bestimmungsgleichung:

$$\frac{1 - \psi - K_{a,v} \cdot v^2 / G_g}{1 - \mu_B \cdot \chi - \phi_{om}} = \frac{\psi - K_{a,h} \cdot v^2 / G_g}{\mu_B \cdot \chi + \phi_{om}} \qquad (8).$$

Aus dieser Beziehung (8) folgt für den optimalen Hinterachs-Bremskraftanteil $\text{phi}_{om}$ die Beziehung

$$\phi_{om} = \frac{\psi - K_{a,h} \cdot v^2 / G_g - \mu_B \cdot \chi \cdot [1 - v^2 (K_{a,v} + K_{a,h})/G_g]}{1 - v^2 (K_{a,v} + K_{a,h})/G_g} \qquad (9)$$

Aus dieser Beziehung ergibt sich für den Bremskraftverteilungsfaktor DB, der allgemein durch die Beziehung

$$DB = F_{B,h}/F_{B,v} = \phi/(1 - \phi) \qquad (10a)$$

gegeben ist, in der mit $F_{B,h}$ die Hinterachs-Bremskraft und mit $F_{B,v}$ die Vorderachs-Bremskraft bezeichnet sind, als optimaler Wert $DB_{om}$ des Bremskraftverteilungsfaktorsdie Beziehung:

$$DB_{om} = \phi_{om}/(1 - \phi_{om}) \qquad (10)$$

Für ein Fahrzeug mit den folgenden Daten:

$$\psi = 0{,}6 \quad \chi = 0{,}141 \quad G_g = 7800 \text{ N}$$
$$K_{a,v} = -0{,}712 \quad K_{a,h} = -1{,}688$$

ergibt eine Auswertung der Beziehung (9) für den optimalen Hinterachs-Bremskraftanteil $\phi_{om}$ für verschiedene Werte der Fahrzeuggeschwindigkeit und verschiedene Werte des Kraftschlußbeiwertes $\mu_B$, daß sich der optimale Hinterachs-Bremskraftanteil in sehr guter Näherung durch die nachfolgende Beziehung angeben läßt:

$$\phi_{om} = 0{,}46 - 0{,}141 \, (\mu_B - 1) + 9 \cdot 10^{-4} \cdot v \qquad (11)$$

Die entsprechende, aus der Beziehung (10) resultierende Abhängigkeit für den optimalen Bremskraftverteilungsfaktor $DB_{om}$ lautet:

$$DB_{om} = 0{,}85 - 0{,}42 \, (\mu_B - 1) + 0{,}0032 \cdot v \qquad (12)$$

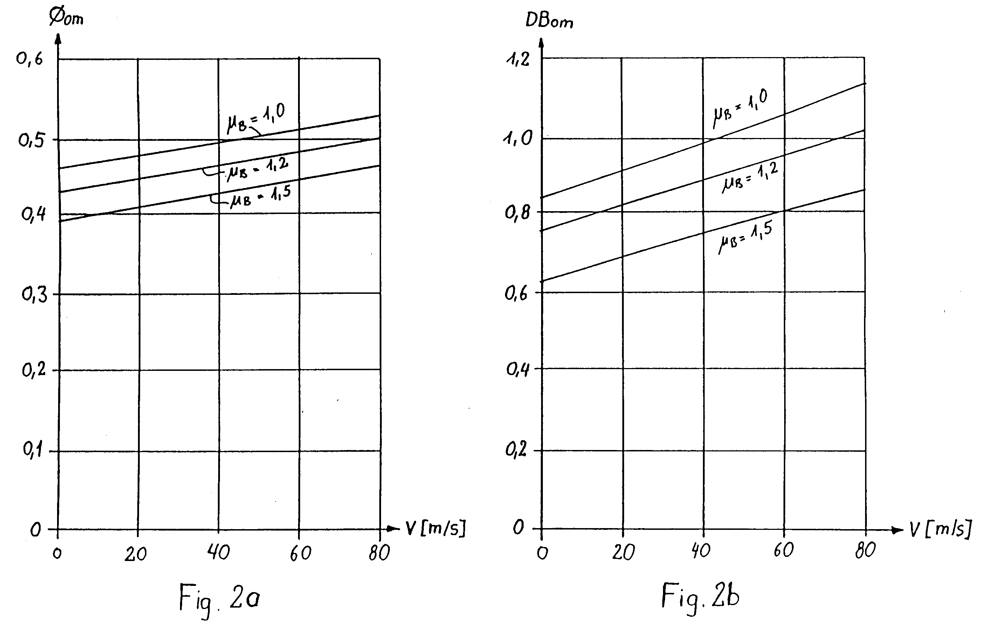

Die den Beziehungen (11) und (12) entsprechenden Geschwindigkeitsabhängigkeiten des optimalen Hinterachs-Bremskraftanteils $\phi_{om}$ sowie des optimalen Bremskraftverteilungsfaktors $DB_{om}$ sind in den Fig. 2a und 2b für die Kraftschlußbeiwerte $\mu_B = 1$; 1,2 und 1,5 als Parameter dargestellt.

Zur Erläuterung eines typischen Auslegungsbeispieles der in der Fig. 1 dargestellten Bremsanlage 10 sei vorausgesetzt, daß das Fahrzeug so gestaltet ist, daß der aerodynamische Abtrieb an der Hinterachse größer ist als an der Vorderachse. Bei dieser Auslegung ist der Minimalwert $DB_{om,min}$ des optimalen Bremskraftverteilungsfaktors $DB_{om}$ durch denjenigen Wert gegeben, der ohne die geschwindigkeitsabhängigen Luft-Abtriebskräfte bei Außenzungen des maximalen Kraftschlusses $\mu_B$ erreicht werden kann.

Die Kolbenflächen $A_{h1}$ der mit dem am Hinterachs-Bremsdruckausgang 21 des Bremsgeräts 16 bei dessen Betägigung bereitgestellten Ausgangsdruck $p_H$ beaufschlagbaren Kolbenpaare 31 ist in Relation zu den wirksamen Kolbenflächen $A_v$ der beiden Kolbenpaare 28 und 29 der beiden Vorderradbremsen 11 und 12, die mit dem am Vorderachs-Bremsdruckausgang 19 des Bremsgeräts 16 bei einer Bremsung bereitgestellten Ausgangsdruck $p_v$ beaufschlagbar sind, der, entsprechend der Ausbildung des Bremsgeräts 16 als üblicher Tandem-Hauptzylinder gleich dem am Hinterachs-Bremsdruckausgang 21 abgegebenen Ausgansdruck $p_h$ ist, so gewählt, daß sich ohne Mitwirkung der Luftabtriebskräfte der Minimalwert $DB_{om,min}$ des optimalen Bremskraftverteilungsfaktors $DB_{om}$ ergibt und damit für den Minimalwert desselben die folgende Relation gilt:

$$DB_{om,min} = \frac{r_{dyn,v} \cdot r_{med,h} \cdot C_h^* \cdot A_{h1}}{r_{dyn,h} \cdot r_{med,v} \cdot C_v^* \cdot A_v} \qquad (13),$$

aus der für die Kolbenfläche $A_{h1}$ unmittelbar die Beziehung folgt:

$$A_{h1} = \frac{r_{dyn,h} \cdot r_{med,v} \cdot C_v^* \cdot DB_{om,min} \cdot A_v}{r_{dyn,v} \cdot r_{med,h} \cdot C_h^*} \qquad (14)$$

In den Beziehungen (13) und (14) ist mit $r_{dyn,v}$ der dynamische Rollradius der Vorderräder, mit $r_{dyn,h}$ der dynamische Rollradius der Hinterräder, mit $r_{med,v}$ der mittlere Reibradius der Vorderradbremsen mit $r_{med,h}$ der mittlere Reibradius der Hinterradbremsem und mit $C_v^*$ sowie $C_h^*$ der jeweils auf die Spannkraft bezogene - dimensionslose - Bremsenkennwert der Vorderradbremsen bzw. der Hinterradbremsen bezeichnet, der bei Scheibenbremsen dem doppelten Betriebsreibwert der Bremsbeläge entspricht.

Unter Einbeziehung der im Rahmen der Bremssättel 26 und 27 der Hinterradbremsen 13 und 14 weiter vorgesehenen Kolbenpaare 30, die an den Druckausgang 32 der elektronisch steuerbaren, zusätzlichen Bremsdruckquelle 33 angeschlossen sind und die durch den Geschwindigkeitseinfluß bzw. einen geringeren Kraftschluß zwischen der Fahrbahn und den gebremsten Fahrzeugrädern bedingten, relativ erhöhten Hinterachs-Bremskraftanteile aufbringen müssen, gilt, wenn deren Kolbenflächen mit $A_{h2}$ und der von der zusätzlichen Bremsdruckquelle 33 - geschwindigkeitsabhängig - erzeugte Bremsdruck mit $p_{h2}$ bezeichnet werden, für den optimalen Bremskraftverteilungsfaktor $DB_{om}$ die Beziehung:

$$DB_{om} = \frac{(A_{h1} \cdot p_v + A_{h2} \cdot p_{h2}) \cdot r_{dyn,v} \cdot r_{med,h} \cdot C_h^*}{A_v \cdot p_v \cdot r_{dyn,h} \cdot r_{med,v} \cdot C_v^*} \qquad (15)$$

woraus unmittelbar folgt:

$$A_{h2} \cdot p_{h2} = \left( DB_{om} \cdot \frac{r_{dyn,h} \cdot r_{med,v} \cdot C_v^* \cdot A_v}{r_{dyn,v} \cdot r_{med,h} \cdot C_h^*} - A_{h1} \right) \cdot p_v \qquad (16)$$

7

Wir zur Erläuterung eines Auslegungsbeispiels von den folgenden Werte ausgegangen:

$r_{dyn.v}$ = 31 cm $r_{med,v}$ = 15,17 cm $C^*_v$ = 0,7 $A_v$ = 25,19 cm$^2$ (entsprechend Kolbendurchmessern von 38 bzw. 42 mm der Kolbenpaare 29 und 28 der Bremssättel 24 und 25 der Vorderradbremsen 11 und 12)

$r_{dyn,h}$ = 35,5 cm (entsprechend einem größeren Durchmesser der Hinterräder des Rennfahrzeuges)

$r_{med,h}$ = 15,17 cm (gleiche Bremsscheiben an den Vorderrad-und den Hinterradbremsen) und

$C^*_h$ = 0,7 sowie einem Wert von 0,64 für den kleinsten optimalen Bremskraftverteilungsfaktor, der sich für einen Kraftschlußbeiwert $\mu_B$ von 1,5 aus der Beziehung (12) für v = 0 ergibt, so folgt aus der Beziehung (14) für die Fläche $A_{h1}$ der mit dem am Hinterachs-Bremsdruckausgang 21 des Bremsgeräts 16 bereitgestellten Ausgangsdruck $p_h$ (= $p_v$) beaufschlagbaren Kolbenpaare 31 der Bremssättel 26 und 27 der Hinterradbremsen 13 und 14 ein Wert von 18,46 cm$^2$, was einem Kolbendurchmesser von 4,85 cm entspricht. Wird stattdessen der Normdurchmesser von 48 mm gewählt, so ergibt sich für die Fläche $A_{h1}$ der Kolben derjenigen Kolbenpaare 31, die direkt an den Hinterachs-Bremsdruckausgang 21 des Bremsgeräts 16 angeschlossen sind, der Wert 18,10 cm$^2$.

Wird für die Kolben der an die elektronisch steuerbare Bremsdruckquelle 33 angeschlossenen Kolbenpaare der Bremssättel 26 und 27 der Hinterradbremsen 13 und 14 eine Normgröße mit einem Durchmesser von 35 mm gewählt, was einer Kolbenfläche $A_{h2}$ von 11,34 cm$^2$ entspricht, so ergibt eine Auswertung der Beziehung (16) unter Berücksichtigung der Beziehung (12) für den optimalen Bremskraft-Verteilungsfaktor, wenn für den Kraftschlußbeiwert $\mu_B$ der Wert 1,5 und für die Fahrzeuggeschwindigkeit v der Wert 60 m/s angesetzt werden, die Beziehung

$$p_{h2} = 0,52 \cdot p_v \tag{16'}$$

Unter der zur Ableitung der Beziehung (9) angenommenen Bedingung, daß gilt:

$$Z^*_{blv} = Z^*_{blh} \,,$$

gilt auch für die maximale Abbremsung Z* des Fahrzeuges unter Einbeziehung der Luftabtriebskräfte, jedoch ohne den zusätzlich wirksamen Luftwiderstand die Beziehung

$$Z^* = Z^*_{blv} = Z^*_{blh} \tag{8'}$$

und damit unter Ausnutzung beispielsweise der Beziehung (4) die Beziehung

$$Z^* = \frac{\mu_B \left[ 1 - \psi - K_{a,v} \cdot v^2 / 6g \right]}{1 - \mu_B \cdot \chi - \phi_{om}} \tag{4'}$$

wobei der sich gemäß der Beziehung (11) ergebende Wert für den optimalen Hinterachs-Bremskraftanteil $\phi_{om}$ gegeben ist durch

$$\phi_{om} = 0,444 \tag{12'}$$

womit sich für die maximale Abbremsung des Fahrzeuges bei den insgesamt angegebenen Daten ergibt:

$$Z^* = 3,17 \tag{4''}$$

Für die - druckbezogenen - Bremsenkennwerte ergeben sich somit für die Vorderachse und die Hinterachse die Beziehungen

$$B^*_v = (2/r_{dyn,v}) \cdot A_v \cdot r_{med,v} \cdot C^*_v = 17,26 \text{ cm}^2 \tag{17}$$

sowie

$$B^*_h = (2/r_{dyn,h}) \bullet A_{h1} + (p_{h2}/p_{h,v}) \bullet A_{h2}) \bullet r_{med,h} \bullet C^*_h = 14{,}36 \text{ cm}^2 \tag{18}$$

und damit für das gesamte Fahrzeug die Beziehung

$$B^* = B^*_v + B^*_h = 31{,}62 \text{ cm}^2 \tag{19}$$

Für den sowohl in den Kolbenpaaren 28 und 29 der Vorderradbremsen als auch in den an den Hinterachs-Bremsdruckausgang 21 des Bremsgeräts 16 angeschlossenen Kolbenpaaren 31 der Bremssättel 26 und 27 der Hinterradbremsen 13 und 14 wirksamen Vorderachs-Bremsen $p_v$ gilt dann:

$$p_v = Z^* \bullet \frac{G_g}{B^*} = 782{,}6 \ N/cm^2 \qquad \cdot (20)$$

und wegen der Beziehung (16'):

$$p_{h2} = 0{,}52 \ p_{h1} = 0{,}52 \ p_v = 407 \ N/cm^2 \tag{16''}$$

womit sämtliche interessierenden Werte bestimmt sind.

Es versteht sich, daß die Beziehungen (15), (16), (16') sowie (17), (18), (20) und (16'') auch für den Fall gelten, daß die Bremssättel der Vorderradbremsen als Zweikolben-Sättel ausgebildet sind, deren Kolben mittlere Querschnittsflächen haben, die der Summe der Flächen der Kolben der einzelnen Kolbenpaare 28 und 29 entsprechen, und daß anstelle von Vier-Kolbensätteln 26 und 27 bei den Hinterradbremsen 13 und 14 jeweils getrennte Bremssättel vorgesehen sein können, von denen je zwei an den Hinterachs-Bremsdruck-Ausgang 21 des Bremsgeräts (16) und zwei an den Druckausgang 32 der elektronisch steuerbaren Bremsdruckquelle 33 angeschlossen sind.

Zur Erläuterung einer möglichen Gestaltung der zur geschwindigkeitsabhängigen Einstellung der Hinterachs-Bremskraft vorgesehenen elektronisch steuerbaren Bremsdruckquelle sei nunmehr auf die Fig. 3a Bezug genommen, die eine Bremsdruckquelle 33 zeigt, bei der der Ausgangsdruck durch Variation der Drehzahl, mit der eine Pumpe 39 angetrieben wird, veränderbar ist, wobei vorausgesetzt ist, daß der von der Pumpe 39 geförderte Volumenstrom drehzahlproportional ist.

Zum Antrieb der Pumpe 39 ist ein Elektromotor 41 mit gesteuert veränderbarer Drehzahl vorgesehen, z.B. ein Servomotor mit zum Pegel der Versorgungsspannung proportionaler Drehzahl oder ein impulsgesteuerter Motor mit zur Frequenz von Ansteuerimpulsen proportionaler Drehzahl, z.B. ein AC-Motor.

Zwischen den Druckausgang 42 der Pumpe 39, die als Hochdruckpumpe mit einem Ausgangsdruckniveau von ca. 100 bar ausgebildet ist und den drucklosen, d.h. auf dem Druck der umgebenden Atmosphäre gehaltenen Vorratsbehälter 43 der Bremsdruckquelle 33, der gleichzeitig auch der Bremsflüssigkeits-Vorratsbehälter der Bremsanlage 10 sein kann, ist eine Drossel 44 mit einstellbarem Strömungswiderstand geschaltet, durch dessen Einstellung das Ausgangsdruckniveau, bei dem die steuerbare Bremsdruckquelle 33 bei einer bestimmten Motordrehzahl arbeitet, vorgebbar ist. Zwischen den Druckausgang 42 der Pumpe 39 und dem Druckausgang 32 der Bremsdruckquelle 33 ist eine Festdrossel 46 geschaltet, durch die eine "Glättung" - Reduzierung von Druckschwankungen - des am Druckausgang 32 der Bremsdruckquelle bereitgestellten Ausgangsdruckes erzielt wird.

Eine zur Drehzahlsteuerung des Antriebsmotors 41 der Pumpe 39 vorgesehene elektronische Steuereinheit 47, welche nachfolgend im wesentlichen anhand ihrer Funktion erläutert wird, bei deren Kenntnis es einem einschlägig vorgebildeten Fachmann ohne weiteres möglich ist, die Steuereinheit 47 mit gängigen Mitteln der elektronischen Schaltungstechnik zu realisieren, so daß von einer Erläuterung schaltungstechnischer Einzelheiten abgesehen werden kann, vermittelt - während einer Bremsung - aus einer On-Line-Verarbeitung in die elektronische Steuereinheit 47 fortlaufend eingegebener Daten, welche mindestens die Information über den Momentanwert der Fahrzeuggeschwindigkeit, den Bremsdruck $p_v$, mit dem die Vorderradbremsen 11 und 12 beaufschlagt sind, sowie den Ist-Wert des am Ausgang 32 der steuerbaren Bremsdruckquelle 33 abgegebenen Ausgangsdruckes - im Ergebnis - eine Auswertung der Beziehung (16) unter Berücksichtigung des gemäß der Beziehung (12) ermittelten optimalen Bremskraftverteilungsfaktors DBom und hieraus die Erzeugung zur Ansteuerung des Antriebsmotors 41 der Pumpe 39 geeigneter Ausgangssignale, durch welche die Pumpe 39 jeweils mit derjenigen Förderleistung betrieben wird, daß sich - zumindest in sehr guter Näherung - bei vorgegebener Auslegung der Bremsanlage 10 der durch die Beziehung (9) geforderte optimale Hinterachs-Bremskraftanteil $\phi_{om}$, d.h. eine mindestens annähernd ideale Bremskraftverteilung im Sinne gleicher Kraftschlußausnutzung an den Vorder- und den Hinterrädern des Fahrzeuges, ergibt, ohne daß hierzu eine exakte Auswertung der Beziehung (9) erforderlich wäre.

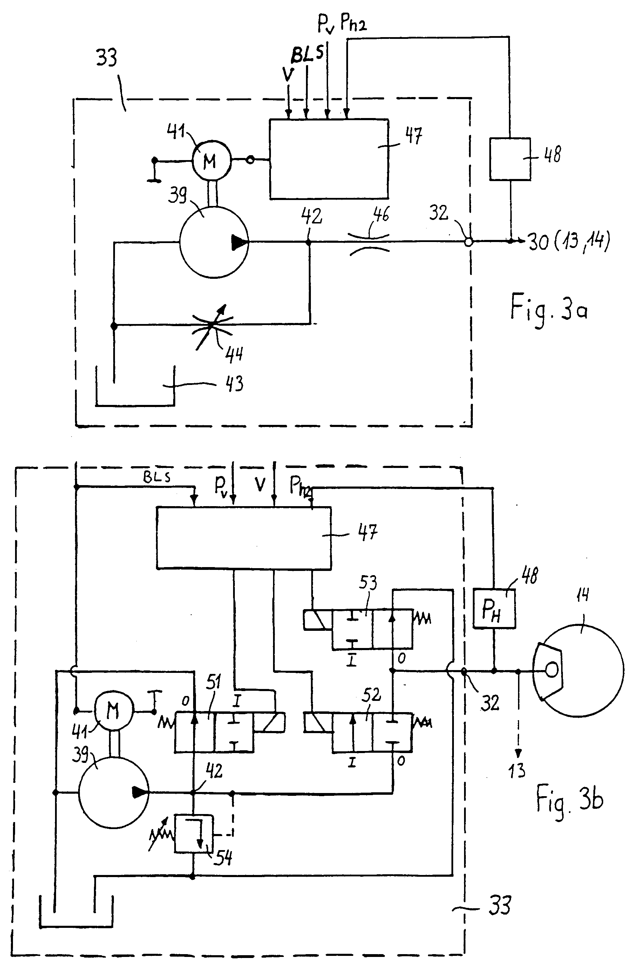

Ein zur Erfassung des Ausgangsdruckes der elektronisch steuerbaren Bremsdruckquelle 33 vorgesehener Druckgeber 48 ist beim Ausführungsbeispiel gemäß Fig. 1 an die sich zu den mit dem Ausgangsdruck der steuerbaren Bremsdruckquelle 33 beaufschlagbaren Kolbenpaaren 30 der Bremssättel 26 und 27 der Hinterradbremsen hin verzweigende Druckversorgungsleitung 23' angeschlossen, so daß sein Ausgangssignal ein Maß für einen Druck - unmittelbar den Ausgangsdruck der Bremsdruckquelle 33 - ist, der geringfügig höher ist als der in die Kolbenpaare 30 tatsächlich eingekoppelte Druck, was jedoch rechnerisch durch die elektronische Steuereinheit 47 berücksichtigt werden kann. Die elektronische Steuereinheit 47 wird zweckmäßigerweise durch das bei einer Betätigung des Bremspedals 17 auftretende Ausgangssignal des Bremslichtschalters 49 aktiviert, wonach erst der Antriebsmotor 41 anläuft. Im Unterschied dazu kann bei der in der Fig. 3b dargestellten Variante einer im Rahmen der Bremsanlage 10 gemäß Fig. 1 geeigneten Variante einer elektronisch steuerbaren Bremsdruckquelle 33 der Antriebsmotor 41 der Pumpe 39 und mit diesem die Pumpe 39 permanent angetrieben sein oder eingeschaltet werden, bevor gebremst wird, z.B. immer dann, wenn der Fahrer den Fuß vom Fahrpedal nimmt, wobei aus Sicherheitsgründen auch hier der Antriebsmotor 41 spätestens mit dem Auftreten des Bremslichtschalter-Ausgangssignals eingeschaltet wird. Auch ein Abschalten des Antriebsmotors 41 mit Beendigung der Bremsung ist nicht erforderlich. Im Prinzip kann der Pumpenantrieb auch vom Motor des Fahrzeuges selbst abgeleitet sein, wie es auch z.B. bei den Versorgungspumpen einer hydraulischen Niveauregulierung der Fall ist.

Bei der steuerbaren Bremsdruckquelle 33 gemäß Fig. 3b wird deren Pumpe 39 zumindest während einer Bremsung mit im wesentlichen konstanter Drehzahl und damit Förderleistung betrieben. Damit die Pumpe 39 erforderlichenfalls in einem weitgehend lastfreien Kurzschlußbetrieb arbeiten kann, ist zwischen den Hochdruckausgang 42 der Pumpe 39 und den Vorratsbehälter 43 ein als 2/2-Wege-Magnetventil ausgebildetes Umlauf- und Druckaufbau-Steuerventil 51 geschaltet, dessen Grundstellung O seine Durchflußstellung ist, in welcher die Pumpe 39 im Kurzschlußbetrieb arbeitet. In der erregten Stellung I dieses Steuerventils 51 ist der Druckausgang 42 der Pumpe 39 gegen den Vorratsbehälter 43 abgesperrt. Weiter ist zwischen den Druckausgang 42 der Pumpe 39 und den Druckausgang 32 der Bremsdruckquelle 33 ein ebenfalls als 2/2-Wege-Magnetventil ausgebildetes Druck-Abgabe-Steuerventil 52 geschaltet, dessen Grundstellung O seine Sperrstellung ist, in welcher der Druckausgang 32 der Bremsdruckquelle 33 gegen den Druckausgang 42 der Pumpe 39 abgesperrt ist, und dessen erregte Stellung I eine Durchfluß-Stellung ist, in welcher der Druckausgang 42 der Pumpe 39 mit dem Druckausgang 32 der Bremsdruckquelle 33 verbunden ist und ein an diesen angeschlossener hydraulischer Verbraucher mit Druck beaufschlagbar ist. Zwischen den Druckausgang 32 der steuerbaren Bremsdruckquelle 33 und deren Vorratsbehälter 43 ist ein weiteres 2/2-Wege-Magnetventil 53 geschaltet, das als Bremsdruck-Abbauventil benutzbar ist, über das eine über den Druckausgang 32 mit Druck beaufschlagbare Radbremse zum Vorratsbehälter 43 der Bremsdruckquelle 33 hin wieder druckentlastet werden kann. Die Grundstellung O dieses 2/2-Wege-Magnetventils ist seine Durchflußstellung, in welcher Bremsflüssigkeit aus einer an den Druckausgang 32 der Bremsdruckquelle 33 angeschlossenen Radbremse zum Vorratsbehälter 43 zurückströmen kann. Seine erregte Stellung I ist die Sperrstellung, in welcher, falls sich das Druckversorgungs-Steuerventil 52 in seiner erregten Stellung I befindet, Bremsdruck in einer angeschlossenen Radbremse aufgebaut wird oder, falls sich dieses Druckversorgungs-Steuerventil 52 in seiner Grundstellung O befindet, der Druck am Druckausgang 32 der steuerbaren Bremsdruckquelle 33 und damit auch in einem an diesen angeschlossenen Verbraucher auf konstantem Niveau gehalten wird.

Weiter ist zwischen den Druckausgang 42 und den Vorratsbehälter 43 der steuerbaren Bremsdruckquelle 33 ein Druckbegrenzungsventil 54 geschaltet, über das, falls sowohl das Umlauf-Steuerventil 51 als auch das Versorgungs-Steuerventil 52 ihre Sperrstellungen einnehmen, Bremsflüssigkeit vom Hochdruckausgang 42 der Pumpe 39 zum Vorratsbehälter 43 abströmen kann, sobald ein einstellbarer Schwellwert des Ausgangsdruckes der Pumpe 39 überschritten ist.

Mit der elektronisch steuerbaren Bremsdruckquelle 33 gemäß Fig. 3b sind dieselben Funktionen erzielbar wie mit der anhand der Fig. 3a ausführlich erläuterten elektronisch steuerbaren Bremsdruckquelle.

Eine bei der Bremsdruckquelle 33 gemäß Fig. 3a durch Erhöhung der Drehzahl des Antriebsmotors 41 der Pumpe 39 steuerbare Druckaufbau-Phase am Druckausgang 32 dieser Bremsdruckquelle kann bei der Bremsdruckquelle 33 gemäß Fig. 3b dadurch erzielt werden, daß bei konstanter Drehzahl des Antriebsmotors 41 und damit konstant gehaltener Förderleistung der Pumpe 39 das Umlauf-Steuerventil in seine Sperrstellung I, das Versorgungs-Steuerventil in seine Durchflußstellung I und das Druckabbau-Steuerventil 53 in seine Sperrstellung I gesteuert werden.

Eine Phase konstanten Ausgangsdruckes der Bremsdruckquellen 33 gemäß den Fig. 3a und 3b wird bei der Variante gemäß Fig. 3a dadurch erzielt, daß die Drehzahl des Antriebsmotors 41 der Pumpe 39 konstant gehalten wird, während bei der Variante gemäß Fig. 3b eine Konstant-Haltephase des Ausgangsdruckes der steuerbaren Bremsdruckquelle 33 dadurch erzielt wird, daß das Versorgungs-Steuerventil 52 und das Druckabbau-Steuerventil 53 in ihre Sperrstellungen gesteuert sind, d.h. das Versorgungs-Steuerventil 52 seine Grundstellung O einnimmt, während das Druckabbau-Steuerventil in seine - sperrende - erregte Stellung I gesteuert ist. Hierbei wird die Konstanthaltung des Ausgangsdruckes der steuerbaren Bremsdruckquelle 33 gemäß Fig. 3b unabhängig davon erreicht, ob das Umlauf-Steuerventil seine Grundstellung O oder seine erregte Stellung I einnimmt. Eine Druckabbau-Phase am Druckausgang 32 der steuerbaren Bremsdruckquelle gemäß Fig. 3a wird dadurch erreicht, daß die Drehzahl des Antriebsmotors 41 reduziert wird. Bei der Variante der steuerbaren Bremsdruckquelle 33 gemäß Fig. 3b wird eine Druckabbauphase am Druckausgang 32 dadurch erzielt, daß das Druckabbau-Steuerventil seine Grundstellung O - seine Durchflußstellung - einnimmt, während gleichzeitig das Druckversorgungs-Steuerventil in seiner - sperrenden - Grundstellung O gehalten ist.

Hieraus ist ersichtlich, daß eine elektronische Steuereinheit 47, die bei der Variante der steuerbaren Bremsdruckquelle 33 gemäß Fig. 3b die für die im Sinne des Regelungszweckes erforderlichen Ansteuersignale für die Ansteuerung der 2/2-Wege-Magnetventile 51,52 und 53 in regelungsgerechter Folge und Kombination erzeugt, diese Ansteuersignale aus genau derselben Verarbeitung der Geschwindigkeits- und Druck-Eingaben gewinnen kann, wie die elektronische Steuereinheit 47, die bei der Variante gemäß Fig. 3a zur Drehzahl-Steuerung des Antriebsmotors 41 der Pumpe 39 vorgesehen ist. Auf das Umlauf-Steuerventil 51, das in seiner Grundstellung O lediglich einen die Pumpe nicht nennenswert belastenden Umlaufbetrieb derselben ermöglicht, kann im Prinzip verzichtet werden, dies jedenfalls dann, wenn die Pumpe der steuerbaren Bremsdruckquelle 33 gemäß Fig. 3b nicht permanent sondern nur während der Bremsbetätigungen angetrieben ist. Für diesen Fall wird schon allein durch das Druckbegrenzungsventil 54 ein hinreichender Schutz der steuerbaren Bremsdruckquelle 33 gegen Überlastung erzielt.

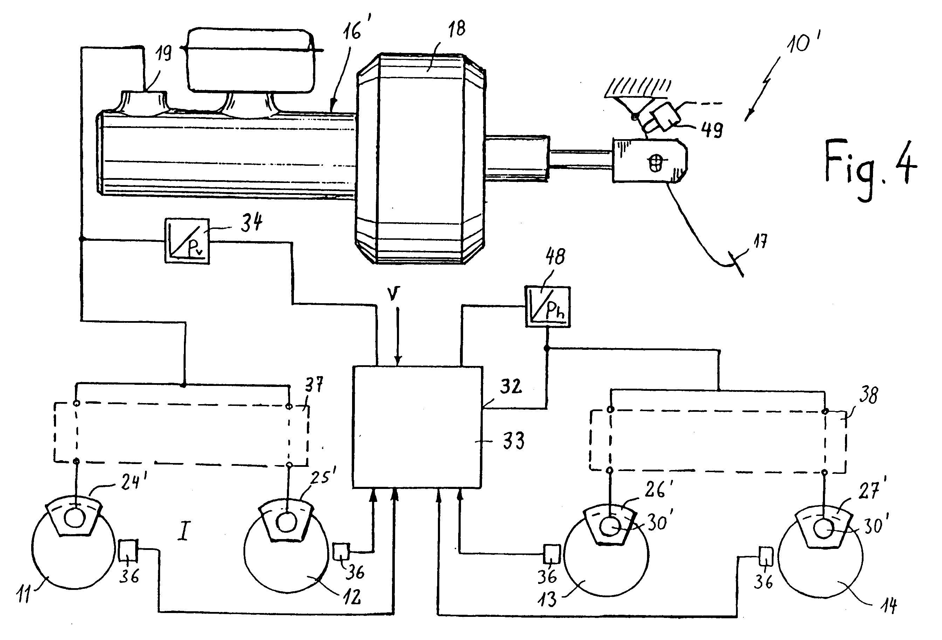

Eine elektronisch steuerbare Bremsdruckquelle 33, wie anhand der Fig. 3a und 3b erläutert, kann bei einer Bremsanlage 10' wie in der Fig. 4 dargestellt, auf die nunmehr Bezug genommen sei, auch zur alleinigen Steuerung der Hinterachs-Bremskraft unter Berücksichtigung der am Fahrzeug wirksamen Luftabtriebskräfte benutzt werden.

Soweit in der Fig. 4 dargestellte Elemente der Bremsanlage 10' mit denselben Bezugszeichen belegt sind, wie Elemente der in der Fig. 1 dargestellten Bremsanlage 10, soll dies den Hinweis auf Bau- und Funktionsgleichheit bzw. -analogie dieser Elemente und auch den Verweis auf die anhand der Beschreibung der Fig. 1 erstellten Beschreibungsteile beinhalten.

Im Unterschied zum Ausführungsbeispiel gemäß Fig. 1 ist bei der Bremsanlage 10' gemäß Fig. 4 als Bremsgerät 16' ein einfacher "Einkreis"-Hauptzylinder vorgesehen, der nur einen einzigen, dem Vorderachs-Bremskreis I zugeordneten Druckausgang 19 hat, über den die Bremsdruck-Einkopplung in die Bremssättel 24' und 25' der beiden Vorderradbremsen 11 und 12 erfolgt, wobei diese Bremssättel 24' und 25' als einfache Zweikolben-Sättel ausgebildet sind, deren Kolbenflächen zweckmäßigerweise der Summe der Kolbenflächen der Kolbenpaare 28 und 29 des Ausführungsbeispiels gemäß Fig. 1 entsprechen. Derartige Zwei-Kolben-Bremssättel 24' und 25' könnten auch bei der Bremsanlage 10 gemäß Fig. 1 für deren Vorderradbremsen 11 und 12 eingesetzt werden.

Auch die Bremssättel 26' und 27' der Hinterradbremsen 13 und 14 der Bremsanlage 10', bei der die Bremsdruck-Beaufschlagung der Hinterradbremsen 13 und 14 ausschließlich mit dem am Druckausgang 32 der steuerbaren Bremsdruckquelle 33 abgegebenen Druck erfolgt, sind als einfache Zweikolben-Sättel ausgebildet, die jeweils nur ein Kolbenpaar 30' haben.

Mit den bei der Erläuterung eines Auslegungsbeispiels der Bremsanlage 10 gemäß Fig. 1 in Ansatz gebrachten Fahrzeugdaten $\psi$; $\chi$; $G_g$; $K_{a,v}$; und $K_{a,h}$ gilt unter Berücksichtigung der der Beziehung (8) entsprechenden Forderung für den optimalen Hinterachs-Bremskraftanteil $\phi_{om}$ sowie unter Berücksichtigung der Luft-Abtriebskräfte die Beziehung (11) und für den optimalen Bremskraft-Verteilungsfaktor $DB_{om}$ die Beziehung (12), wie eines anhand des Ausführungsbeispiels gemäß Fig. 1 entwickelt und in den Fig. 2a und 2b dargestellt.

Aufgrund der allgemein gültigen Beziehung

$$DB = \frac{F_{Bh}}{F_{Bv}} = \frac{B_h^* \cdot p_h}{B_v^* \cdot p_v} \qquad\qquad (10a')$$

in welcher $B^*_v$ und $B^*_h$ durch die Beziehungen

$$B^*_v = \frac{2}{r_{dyn,v}} \cdot A_v \cdot r_{med,v} \cdot C^*_v \qquad (17')$$

sowie

$$B^*_h = \frac{2}{r_{dyn,h}} \cdot A_h \cdot r_{med,h} \cdot C^*_h \qquad (18')$$

gegeben sind, gilt:

$$DB = \frac{r_{dyn,v} \cdot A_h \cdot r_{med,h} \cdot C^*_h \cdot p_h}{r_{dyn,h} \cdot A_v \cdot r_{med,v} \cdot C^*_v \cdot p_v} \qquad (21)$$

wobei mit $A_v$ die druckbeaufschlagbaren Flächen der Kolbenpaare der Vorderrad-Bremssättel 24' und 25' und mit $A_h$ die wirksamen Kolbenflächen der Kolbenpaare 30' der Bremssättel 26' und 27'' der Hinterradbremsen 13 und 14 bezeichnet sind. Gleiche Auslegung der Vorderradbremsen 11 und 12 und der Hinterradbremsen 13 und 14 vorausgesetzt, jedoch verschiedene Werte der dynamischen Rollradien $r_{dyn,v}$ und $r_{dyn,h}$ von z.B. 31 cm bzw. 35,5 cm, wobei der dynamische Rollradius $r_{dyn,h}$ der größere ist ergibt sich mit dem optimalen Wert $DB_{om}$ des Bremskraft-Verteilungsfaktors gemäß der Beziehung (12) für den in die Bremssättel 26' und 27' der Hinterradbremsen 13 und 14 einzuspeisenden, von der steuerbaren Brems-druckquelle 33 bereitzustellenden Druckes $p_h$ die Beziehung

$$p_h = DB_{om} \cdot \frac{r_{dyn,h}}{r_{dyn,v}} \cdot p_v = \left[0,85 - 0,42 \left(\mu_B - 1\right) + 0,0032 \cdot v\right] \cdot \frac{r_{dyn,h}}{r_{dyn,v}} \cdot p_v \quad (22)$$

Für einen Kraftschlußbeiwert $\mu_B$ von 1,5 und einer Fahrzeuggeschwindigkeit v von 60 m/s sowie mit den angegebenen Werten der dynamischen Rollradien der Vorder- und der Hinterräder des Fahrzeuges ergibt eine Auswertung der Beziehung (22)

$$p_h = (0,85 - 0,42 \cdot 0,5 + 0,0032 \cdot 60) \cdot \frac{35,5}{31} \cdot p_v \qquad (22')$$

Unter Berücksichtigung des auch bei der Bremsanlage 10' für den Vorderachs-Bremsdruck ansetzbaren Wertes gemäß der Beziehung (20) ergibt sich für den beim angenommenen Fallbeispiel in die Hinterradbremsen 13 und 14 einzukoppelnden Hinterachs-Bremsdruck $p_h$ der Wert 0,73 • 782,6 N/cm$^2$ = 571 N/cm$^2$.

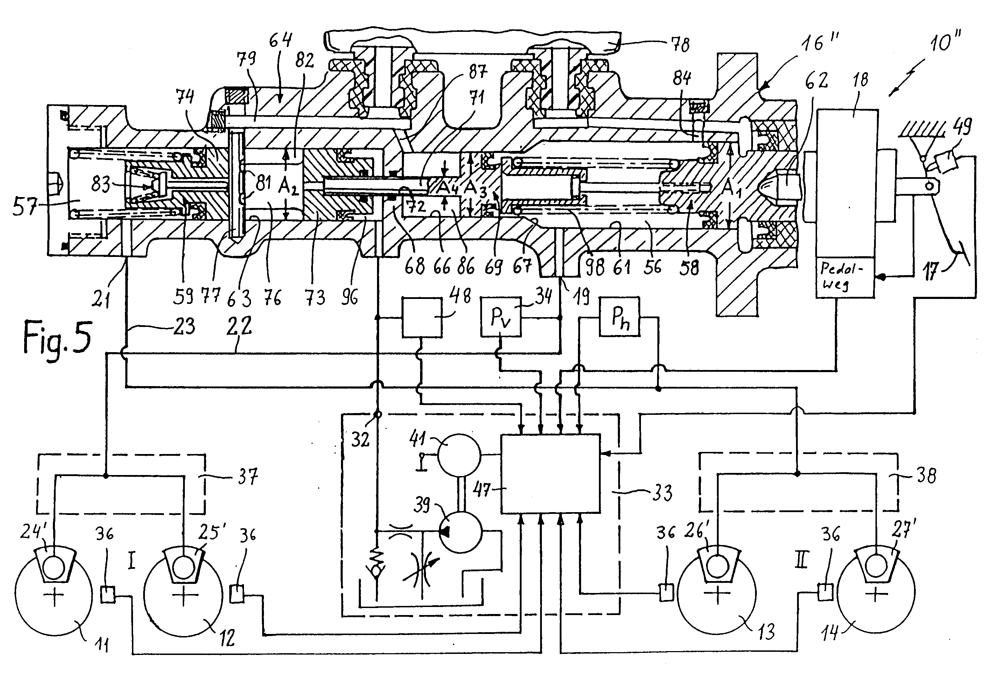

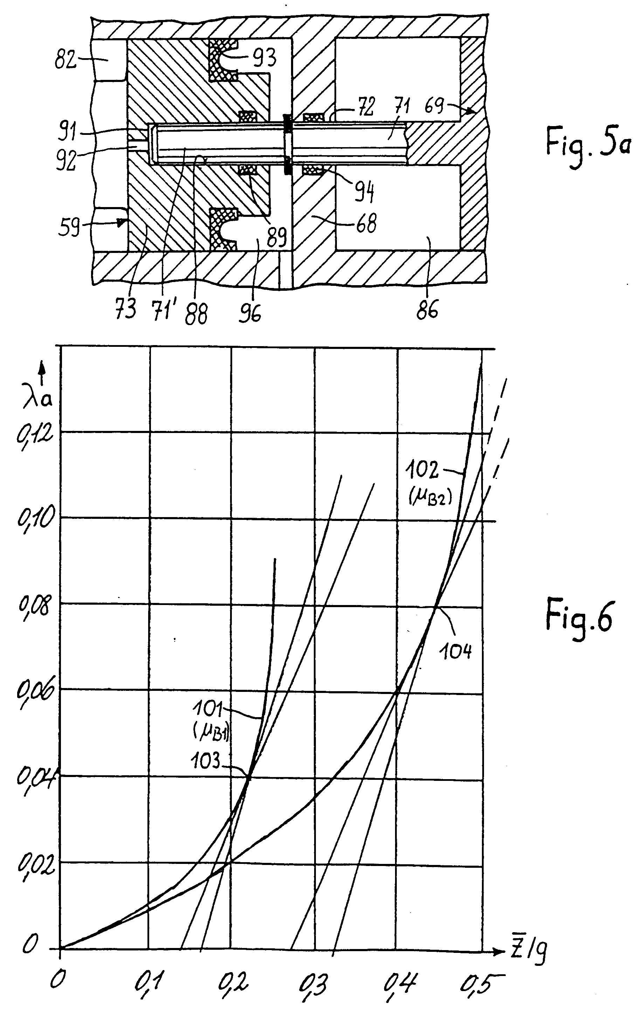

Auch die in der Fig. 5, auf die nunmehr Bezug genommen sei, dargestellte Bremsanlage 10'' arbeitet nach dem Prinzip der Optimierung des Bremskraft-Verteilungsfaktors gemäß der Relation (10) unter Berücksichtigung des optimalen Hinterachs-Bremskraftanteils gemäß der Relation (9), die aus der Bedingung (8) folgt.

Soweit in der Fig. 5 dargestellte Elemente der Bremsanlage 10'' mit denselben Bezugszeichen belegt sind wie in den Fig. 1 und 4 dargestellte Elemente der Bremsanlagen 10 oder 10', soll dies wiederum den Hinweis auf die Bau- und Funktionsgleichheit und/oder -analogie der solchermaßen identisch bezeichneten Elemente bedeuten und auch den Verweis auf die diesbezüglich zu den Fig. 1 und 4 erstellten Beschreibungsteile beinhalten, auch wenn diese Elemente anhand der Beschreibung der Fig. 5 nicht eigens erläutert werden.

Die Bremsanlage 10'' gemäß Fig. 5 ist einerseits der Bremsanlage 10 gemäß Fig. 1 insoweit ähnlich, als das Bremsgerät 16'' als Tandem-Hauptzylinder ausgebildet ist, der einen Primär-Ausgangsdruckraum 56 hat, an dessen Druckausgang 19 über die Hauptbremsleitung 22 und von dieser ausgehende Bremsleitungszweige die Vorderradbremsen 11 und 12 angeschlossen sind, sowie einen Sekundär-Ausgangsdruckraum 57, an dessen Druckausgang 21 über die Hauptbremsleitung 22 und von dieser ausgehende Bremsleitungszweige die beiden Hinterradbremsen 13 und 14 angeschlossen sind.

Die Bremsanlage 10'' gemäß Fig. 5 ist andererseits der Bremsanlage 10' gemäß Fig. 4 insoweit ähnlich, als auch bei der Bremsanlage 10'' gemäß Fig. 5 die Bremssättel 24' und 25' der Vorderradbremsen 11 und 12 sowie die Bremssättel 26' und 27' der Hinterradbremsen 13 und 14 als "einfache" Zwei-Kolben-Sättel ausgebildet sein können.

Ähnlichkeit oder Analogie zu den anhand der Fig. 1 und 4 erläuterten Bremsanlagen 10 und 10'' besteht auch insoweit, als eine den Hinterachs-Bremsdruck beeinflussende elektronisch steuerbare Druckquelle 33 entweder mit der in der Fig. 3a oder der in der Fig. 3b dargestellten Ausbildung realisiert sein kann, wenngleich in der Fig. 5 für die Druckquelle 33 eine der Fig. 3a entsprechende Darstellung - zum Zweck der Erläuterung - gewählt ist.

Unterschiedlich gegenüber den Bremsanlagen 10 und 10' ist jedoch die Ausbildung des Bremsgeräts 16'' als Tandem-Hauptzylinder spezieller Bauart, die nachfolgend im Detail erläutert wird:

Der Tandem-Hauptzylinder 16'' ist als sogenannter Stufen-Hauptzylinder ausgebildet, bei dem der die eine axial bewegliche Begrenzung seines Primär-Ausgangsdruckraumes 56 bildendes Primärkolben 58 und der die axial bewegliche Begrenzung eines Sekundär-Ausgangsdruckraumes 57 bildende Sekundärkolben 59 unterschiedliche Querschnittsflächen $A_1$ und $A_2$ haben, wobei die Querschnittsfläche $A_1$ des Primärkolbens 58 die größere ist.

Zwischen der Bohrungsstufe 61, in welcher der Primärkolben 58 druckdicht verschiebbar geführt ist, an dem über eine Druckstange 62, die mittels des Bremskraftverstärkers 18 verstärkte Betätigungskraft angreift und der Bohrungsstufe 63 des insgesamt mit 64 bezeichneten Hauptzylindergehäuses, in welcher der die axial bewegliche Begrenzung des Sekundär-Ausgangsdruckraumes 57 bildende Sekundärkolben 59 druckdicht verschiebbar geführt ist, erstreckt sich eine weitere, zentrale Bohrungsstufe 66, welche über eine Ringschulter 67 an die die gehäusefeste, radiale Begrenzung des Primär-Ausgangsdruckraumes 56 bildende Bohrungsstufe 61 anschließt, und gegenüber derjenigen Bohrungsstufe 63, in welcher der Sekundärkolben 59 druckdicht verschiebbar geführt ist, durch eine Zwischenwand 68 des Zylindergehäuses 64 abgegrenzt ist. In dieser zentralen Bohrungsstufe 66 ist ein die innere axial bewegliche Begrenzung des Primär-Ausgangsdruckraumes 56 bildender Betätigungskolben 69 druckdicht verschiebbar geführt, der mittels eines schlanken, axialen Stößels 71, der durch eine zentrale Bohrung 72 der Zwischenwand 68 des Hauptzylindergehäuses 64 druckdicht verschiebbar hindurchtritt, zentral an einen inneren Kolbenflansch 73 des Sekundärkolbens 59 abstützbar ist, dessen den Sekundär-Ausgangsdruckraum 57 unmittelbar begrenzender, "äußerer" Kolbenflansch 74 mit dem inneren Kolbenflansch 73 über eine geschlitzte Kolbenstange 76 verbunden ist, durch deren Schlitz ein gehäusefestes Anschlagröhrchen 77 radial durchtritt, das mit einer zum Bremsflüssigkeits-Vorratsbehälter 78 führenden Gehäusekanal 79 in kommunizierender Verbindung steht und mit Öffnungen 81 versehen ist, über die Bremsflüssigkeit in den sich zwischen den beiden Kolbenflanschen 73 und 74 des Sekundärkolbens 59 erstreckenden Nachlaufraum 82 überströmen kann. Der den Sekundär-Ausgangsdruckraum 57 beweglich begrenzende Flansch 74 des Sekundärkolbens 59 ist mit einem insgesamt mit 83 bezeichneten Zentralventil versehen, das in der dargestellten, dem nicht betätigten Zustand der Bremsanlage entsprechenden Grundstellung des Sekundärkolbens 59 durch Anschlagwirkung zwischen einem Stößel seines Ventilkörpers und dem Anschlagröhrchen 77 in seiner Offenstellung gehalten ist, so daß zwischen dem Sekundär-Ausgangsdruckraum 57 und dem Bremsflüssigkeits-Vorratsbehälter 78 über den Nachlaufraum 82 ein Druckausgleich möglich ist und das nach einem kleinen Anfangsabschnitt des Bremsdruckaufbau-Hubes des Sekundärkolbens 59 in seine Schließ-Position gelangt, in welcher der Druckaufbau im Sekundär-Ausgangsdruckraum 57 möglich ist. Zum entsprechenden Druckausgleich in dem dem Vorderachs-Bremskreis I zugeordneten Primär-Ausgangsdruckraum 56 ist eine mit dem Bremsflüssigkeits-Vorratsbehälter 78 in kommunizierender Verbindung stehende Ausgleichsbohrung 84 vorgesehen, deren druckraumseitige Mündungsöffnung in der dem nicht betätigten Zustand der Bremsanlage 10'' entsprechenden Grundstellung des Primärkolbens 58 freigegeben ist und nach einem kleinen Anfangsabschnitts des Bremsdruckaufbau-Hubes des Primärkolbens 58 gegen den Primär-Ausgangsdruckraum 56 abgesperrt ist, wonach in diesem bei weiterer Kolbenverschiebung Bremsdruck aufbaubar ist.

Der von dem axialen Stößel 71 des Betätigungskolbens 69 durchsetzte, axial gehäusefest durch die Zwischenwand 68 des Gehäuses 64 und axial beweglich durch den Betätigungskolben 69 begrenzte Ringraum 86, dessen ringförmige Querschnittsfläche um die Querschnittsfläche $A_4$ des axialen Stößels 71 kleiner ist als die Gesamt-Querschnittsfläche $A_3$ des Betätigungskolbens 69, auf der dieser mit dem im Primär-Ausgangsdruckraum 56 erzeugten Druck beaufschlagbar ist, ist über einen weiteren Gehäusekanal 87 permanent mit dem Bremsflüssigkeits-Vorratsbehälter 78 verbunden und daher drucklos gehalten.

Der innere Kolbenflansch 73 des Sekundärkolbens 59 ist, wie am besten aus der Detaildarstellung der Fig. 5a ersichtlich, mit einer zu der Zwischenwand 68 des Gehäuses 64 hin offenen Sackbohrung 88 versehen, in welcher der freie Endabschnitt 71' des axialen Stößels 71 des Betätigungskolbens 69 druckdicht verschiebbar geführt ist, wobei eine die diesbezügliche Abdichtung zwischen dem Stößel 71, 71' und dem Sekundärkolben 59 vermittelnde Ringdichtung 89 kolbenfest an der der Zwischenwand 68 des Gehäuses zugewandten Seite des Sekundärkolbenflansches 73 angeordnet ist. In der dargestellten Grundstellung des Sekundärkolbens 59 und des Betätigungskolbens 69 ist dessen Stößel 71 mit der Endstirnfläche seines Endabschnittes 71' am Grund 91 der Sackbohrung 88 axial abgestützt. In die Sackbohrung 88 des inneren Kolbenflansches 73 des Sekundärkolbens 59 mündet eine zentrale Ausgleichsbohrung 92 kleineren Durchmessers, über die bei Relativbewegungen zwischen dem Sekundärkolben 59 und dem Betätigungskolben 69 Bremsflüssigkeit aus dem Nachlaufraum 82 in die Sackbohrung 88 nachströmen bzw. aus dieser in den Nachlaufraum 82 verdrängt werden kann. Der mittels der kolbenfesten Ringdichtung 89 radial innen und mittels einer Dichtmanschette 93 des inneren Kolbenflansches 73 radial außen gegen den Nachlaufraum 82 und mittels der gehäusefesten, innerhalb der zentralen Bohrung 72 der Zwischenwand 68 angeordneten Ringdichtung 94 gegen den drucklosen Ringraum 86 abgedichtete, vom freien Endabschnitt 71' des Stößels 71 des Betätigungskolbens 69 axial durchsetzte Ringraum 96 ist über einen Steueranschluß 97 mit dem Druckausgang 32 der elektronisch steuerbaren Bremsdruckquelle 33 verbunden und bildet somit einen Steuerdruckraum, durch dessen Beaufschlagung mit dem Ausgangsdruck der steuerbaren Bremsdruckquelle 33 der über den Druckausgang 21 des Sekundär-Ausgangsdruckraumes 37 des Tandemhauptzylinders 16'' in die Hinterradbremsen 13 und 14 einkoppelbare Bremsdruck im vorstehend erläuterten Sinne der Optimierung des Hinterachs-Bremskraftanteils $\phi_{om}$ steuerbar ist.

Der Primärkolben 58, der Sekundärkolben 59 und der Betätigungskolben 69 werden durch Rückstellfedern 98 und 99 in ihre durch Anschlagwirkung markierte Grundstellungen gedrängt, wobei die am Primärkolben 58 angreifende Rückstellfeder 98 an dem Betätigungskolben 69 angreift, dessen Grundstellung somit durch seine axiale Abstützung am Grund 91 der Sackbohrung 88 des Sekundärkolbens 59 markiert ist, dessen Grundstellung wiederum durch rückwärtige Anlage seines äußeren Kolbenflansches 74 an dem Anschlagröhrchen 77 markiert ist, wobei die Rückstellfeder 99 des Sekundärkolbens 59 etwas kräftiger sein muß als diejenige des Primärkolbens 58.

Der bei einer selbsttätigen Einstellung der Vorderachs-/Hinterachs-Bremskraftverteilung gemäß den Beziehungen (9), (11) und (12) ebenfalls bedeutsame, von den Fahrbahnverhältnissen, der Reifenbeschaffenheit und den Wetterbedingungen gegebenenfalls drastisch variierende Kraftschlußbeiwert $\mu_B$ ist in einfachster Gestaltung der Bremsanlagen 10,10' und 10'' dadurch berücksichtbar, daß die elektronische Steuereinheit 47 der zusätzlichen Druckquelle 33 mit einer Eingabe-Einrichtung versehen ist, mittels derer ein geeigneter Wert, der vom Fahrer gegebenenfalls während eines Rennes verändert werden kann, eingebbar ist. Wenn das Fahrzeug mit einem Antiblockiersystem versehen ist, so ist eine selbsttätige Bestimmung des Kraftschlußbeiwertes $\mu_B$ dadurch möglich, daß der Fahrer eine Vollbremsung durchführt, bei der an sämtlichen Fahrzeugrädern die Antiblockierregelung wirksam wird, wobei dann, vorausgesetzt, daß an jedem Fahrzeugrad derselbe Kraftschlußbeiwert wirksam ist, dieser gleich der im Regelungsbetrieb sich ergebenden Fahrzeugverzögerung Z ist, die z.B. aus einer Auswertung der Ausgangssignale der den Fahrzeugrädern einzeln zugeordneten Raddrehzahlsensoren 36 gewonnen werden kann.

Zur Erläuterung einer weiteren Möglichkeit einer dynamischen Bestimmung des Kraftschlußbeiwertes $\mu_B$, die im Fahrbetrieb eine fortlaufende Einstellung der elektronischen Steuereinheit 47 auf den jeweils maßgeblichen Kraftschlußbeiwert $\mu_B$ ermöglicht, sei abschließend noch auf das Diagramm der Fig. 6 verwiesen, in dem für verschiedene Kraftschluß-Beiwerte $\mu_{B1}$ und $\mu_{B2}$ als Parameter die Abhängigkeit des Antriebsschlupfes $\lambda_a$ von der auf die Erdbeschleunigung g bezogenen Vortriebs-Beschleunigung Z aufgetragen ist, wobei als Abszisse die Vortriebsbeschleunigung Z und als Ordinate der Antriebsschlupf $\lambda_a$ aufgetragen ist, der durch die Beziehung

14

$$\lambda a = \frac{v_{ant}}{v_{ant} - v_f} \qquad (23)$$

gegeben ist, in der mit $v_{ant}$ die Radumfangsgeschwindigkeit der angetriebenen Fahrzeugräder und mit $V_f$ diejenige der freilaufenden Fahrzeugräder bezeichnet sind. Die ab dem Beschleunigungswert 0,2 und dem Schlupfwert 0,04 steil ansteigende $\lambda_a$/Z-Verlaufskurve 101 entspricht hierbei einem relativ niedrigem Kraftschlußbeiwert $\mu_{B1}$ während die bei dem Beschleunigungswert von etwa 0,45 und dem Schlupfwert von 0,08 an steil ansteigende $\lambda_a$/Z-Verlaufskurve 102 einem relativ hohen Kraftschlußbeiwert $\mu_{B2}$ entspricht. Bei diesen Verlaufskurven 101 und 102 entsprechen diejenigen Punkte 103 und 104, von denen an der steile Anstieg dieser Kurven 101 und 102 einsetzt, dynamischen Zuständen, in denen annähernd das Maximum der Tangentialkraft-Übertragungsfähigkeit zwischen den beschleunigenden Fahrzeugrädern und der Fahrbahn erreicht ist, wobei für diesen Zustand für die übertragbare Traktionskraft $F_{TH}$ die Beziehung

$$F_{TH} = \mu_B \cdot (\psi + \overline{Z} \cdot \chi) \cdot G_g \qquad (24)$$

gilt, wobei vorausgesetzt ist, daß das Fahrzeug einen Hinterachs-Antrieb hat. Aus dieser Beziehung (24) folgt wegen $Z = F_{TH}/G$ für den ausnutzbaren Kraftschlußbeiwert $\mu_B$ die Beziehung

$$\mu_B = \overline{Z}/(\psi - \overline{Z} \cdot \chi) \qquad (24')$$

in welcher für Z derjenige Wert einzusetzen ist, der dem jeweiligen "Knickpunkt" 103 bzw. 104 der jeweiligen Verlaufskurve 101 bzw. 102 entspricht. In diesen "Knickpunkten" 103 und 104 haben die Verlaufskurven 101 und 102 jeweils eine Steigung $d\lambda_a/d\overline{Z}$ zwischen 0,4 und 0,6. Aus einer fortlaufenden Erfassung des Antriebsschlupfes $\lambda_a$ und der Fahrzeugbeschleunigung $\overline{Z}$, Bildung des Differentialquotienten $d\lambda_a/d\overline{Z}$ und Vergleich desselben mit Schwellenwerten zwischen 0,4 und 0,6, was mittels der elektronischen Steuereinheit 47 ohne weiteres möglich ist, können daher die "Knickpunkte" 103 und 104 der jeweiligen Verlaufskurven 101 und 102 für verschiedene $\mu_B$-Werte und diese selbst gemäß der Beziehung (24') ermittelt werden, wodurch die fortlaufende Erfassung des jeweils geltenden $\mu_B$-Wertes möglich ist.

Die Bestimmung der Fahrzeugbeschleunigung $\overline{Z}$ kann durch eine differenzierende Verarbeitung für die Radumfangsgeschwindigkeiten charakteristischer Ausgangssignale der Raddrehzahlsensoren 36 oder unmittelbar mit Hilfe eines Längsbeschleunigungs-Sensors gewonnen werden.

**Patentansprüche**

**1.** Bremsanlage mit veränderbarer Vorderachs-/Hinterachs-Bremskraftverteilung für ein auf hohe Geschwindigkeiten ausgelegtes Fahrzeug, insbesondere ein Rennfahrzeug, bei dem die aerodynamischen Abtriebskräfte mit zunehmender Fahrzeuggeschwindigkeit (v) zu einer Zunahme der Achslasten führen, die an der Hinterachse größer ist als an der Vorderachse, wobei die Auslegung der Radbremsen und eines zur Erzeugung mindestens des in die Vorderradbremsen einkoppelbaren Bremsdruckes ($p_V$) vorgesehenen mittels eines Bremspedals betätigbaren Bremsgeräts dahingehend getroffen ist, daß bei einem definiert vorgegebenen Grenzwert der vom Fahrer auszuübenden Betätigungskraft, der vollständiger Kraftschlußausnutzung an den gebremsten Fahrzeugrädern entsprechende Betrag der Fahrzeugverzögerung erreichbar ist, **dadurch gekennzeichnet**, daß im Rahmen einer Einrichtung zu einer selbsttätigen Steuerung der Vorderachs-/Hinterachs-Bremskraftverteilung eine separate Druckquelle (33) mit einstellbarem Ausgangsdruck vorgesehen ist, der unmittelbar als Bremsdruck in Kolbenpaare (30;30') von Bremssätteln (26,27;26',27') der Hinterradbremsen (13, 14) des Fahrzeuges einkoppelbar ist, daß diese Druckquelle (33) eine elektronische Steuereinheit (47) umfaßt, welche aus einer Verarbeitung mindestens eines die Fahrzeuggeschwindigkeit (v) repräsentierenden Signals sowie eines mindestens einstellbar vorgebbaren Betrages des Kraftschlußbeiwertes ($\mu_B$), der an den Fahrzeugrädern vorliegt oder als vorliegend angenommen und eingestellt ist, fortlaufend einen Sollwert ($DB_{om}$) für einen optimierten Bremskraft-Verteilungsfaktor gemäß einer linearen Beziehung

$$DB_{om} = k_1 + k_2 \cdot \mu_B + k_3 \cdot v$$

bildet, in welcher $k_1$, $k_2$ und $k_3$ fahrzeugspezifische Konstanten sind, die aus einer linearen Interpolation der v- und $\mu_B$-Abhängigkeit des $DB_{om}$ als Interpolationskonstanten ermittelt sind, wenn dieser selbst gemäß der Relation

$$ DB_{om} = \frac{\varnothing_{om}}{1 - \varnothing_{om}} $$

für verschiedene Werte eines optimierten Hinterachs-Bremskraftanteils $\phi_{om}$ ermittelt ist und dabei für diesen verschiedene, sich aus einer numerischen Auswertung der Beziehung

$$ \varnothing_{om} = \frac{\psi - K_{a,h} \cdot v^2/G_g - \mu_B \cdot \chi \left[ 1 - v^2 (K_{a,v} + K_{a,h})/G_g \right]}{1 - v^2 (K_{a,v} + K_{a,h})/G_g} $$

ergebende Werte in Ansatz gebracht sind, wobei in dieser Beziehung mit
$\psi$ der Hinterachslastanteil
$\chi$ die radstandsbezogene Schwerpunktshöhe des Fahrzeuges
$K_{av}$ der Luft-Auftriebs- bzw. -Abtriebskoeffizient an der Vorderachse
$K_{a,h}$ der Luft-Auftriebs- bzw. -Abtriebskoeffizient an der Hinterachse,
$\mu_b$ der Kraftschlußbeiwert und mit $G_g$ das Fahrzeuggewicht bezeichnet sind, daß eine Sensor-Einrichtung (34) vorgesehen ist, die bei einer Bremsung ein für den Momentanwert der Vorderachs-Bremskraft $F_{BV}$ charakteristisches Signal erzeugt, und daß die Bremskraft-Steuereinrichtung (33) die Hinterachs-Bremskraft $F_{BH}$ der Vorderachs-Bremskraft $F_{BV}$ gemäß der Beziehung

$$ F_{BH} = DB_{om} \cdot F_{BV} $$

nachführt.

2. Bremsanlage nach Anspruch 1, mit Vorderachs-/Hinterachs-Bremskreisaufteilung, wobei die Vorderradbremsen (11,12) gemeinsam an einen Ausgangsdruckraum des Bremsgeräts angeschlossen sind, in dem durch Betätigung des Bremspedals statischer Druck als Bremsdruck $p_V$ erzeugbar ist, **dadurch gekennzeichnet**, daß die Hinterradbremsen (13,14) ausschließlich mit dem Ausgangsdruck der steuerbaren Druckquelle (33) beaufschlagbar sind, und daß dieser Ausgangsdruck $p_h$ dem Vorderachs-Bremsdruck $p_V$ gemäß der Beziehung

$$ p_h = DB_{om} \cdot p_v \cdot r_{dyn,h}/r_{dyn,v} $$

nachgeführt wird, wobei mit $r_{dyn,h}$ der dynamische Rollradius der Hinterräder und mit $r_{dyn,v}$ der dynamische Rollradius der Vorderräder des Fahrzeuges bezeichnet sind.

3. Bremsanlage nach Anspruch 2 für ein Fahrzeug mit Vorderachs-/Hinterachs-Bremskreisaufteilung und einem Tandem-Hauptzylinder als Bremsgerät mit einem den Vorderradbremsen zugeordneten Ausgangsdruckraum und einem den Hinterradbremsen zugeordneten Ausgangsdruckraum, **dadurch gekennzeichnet**, daß die Hinterradbremsen (13,14) Vier-Kolben-Sättel (26,27) gleicher Auslegung mit je zwei Kolbenpaaren (30,31) gleicher oder verschiedener Dimensionierung haben, wobei die Kolbenpaare (30,31) des jeweils einen Bremssattels (26 bzw. 27) mit einem jeweils identisch dimensionierten Kolbenpaar (30,31) des anderen Bremssattels (27 bzw. 26) über eine gemeinsame Bremsleitung (23',23) miteinander gekoppelt sind, wobei die eine Bremsleitung (23) an den den Hinterradbremsen (13,14) zugeordneten Druckausgang (21) des Bremsgeräts (16) und die andere Bremsleitung (23') an den Druckausgang (32) der steuerbaren Druckquelle (33) angeschlossen sind.

4. Bremsanlage mit veränderbarer Vorderachs-/Hinterachs-Bremskraftverteilung für ein auf hohe Geschwindigkeiten ausgelegtes Fahrzeug, insbesondere ein Rennfahrzeug, bei dem die aerodynamischen Abtriebskräfte mit zunehmender Fahrzeuggeschwindigkeit (v) zu einer Zunahme der Achslasten führen, die an der Hinterachse größer ist als an der Vorderachse, wobei die Auslegung der Radbremsen und eines zur Erzeugung mindestens des in die Vorderradbremsen einkoppelbaren Bremsdruckes ($p_V$) vorgesehenes mittels eines Bremspedals betätigbaren Bremsgeräts dahingehend getroffen ist, daß bei einem definiert vorgegebenen Grenzwert der vom Fahrer auszuübenden Betätigungskraft der vollständiger Kraftschlußausnutzung an den gebremsten Fahrzeugrädern entsprechende Betrag der Fahrzeugverzögerung erreichbar ist, **dadurch gekennzeichnet**, daß im Rahmen einer Einrichtung zu einer selbsttätigen Steuerung der Vorderachs-/Hinterachs-Bremsverteilung eine separate Druckquelle (33) mit elektrisch steuerbarem Ausgangsdruck vorgesehen ist, der in einen Steuerdruckraum (96) des Bremsgeräts (16") einkoppelbar ist und dadurch dem durch alleinige Pedalbetätigung des Bremsgeräts (16") erzeugbaren Bremsdruck, der in die Hinterradbremsen (13,14) eingekoppelt wird, additiv überlagert wird, daß die Druckquelle (33) eine elektronische Steuereinheit (47) umfaßt, welche aus einer Verarbeitung mindestens eines die Fahrzeuggeschwindigkeit (v) repräsentierenden Signals sowie eines mindestens einstellbar vorgebbaren Betrages des Kraftschlußbeiwertes ($\mu_B$), der an den Fahrzeugrädern vorliegt oder als vorliegende angenommen und eingestellt ist, fortlaufend einen Sollwert ($DB_{om}$) für einen optimierten Bremskraft-Verteilungsfaktor gemäß einer linearen Beziehung

$$DB_{om} = k_1 + k_2 \cdot \mu_B + k_3 \cdot v$$

bildet, in welcher $k_1$, $k_2$ und $k_3$ fahrzeugspezifische Konstanten sind, die aus einer linearen Interpolation der v- und $\mu_B$-Abhängigkeit des $DB_{om}$ als Interpolationskonstanten ermittelt sind, wenn dieser selbst gemäß der Relation

$$DBom = \frac{\emptyset_{om}}{1 - \emptyset_{om}}$$

für verschiedene Werte eines optimierten Hinterachs-Bremskraftanteils $\phi_{om}$ ermittelt ist und dabei für diesen verschiedene, sich aus einer numerischen Auswertung der Beziehung

$$\emptyset_{om} = \frac{\psi - K_{a,h} \cdot v^2/G_g - \mu_B \cdot \chi \left[1 - v^2 (K_{a,v} + K_{a,h})/G_g\right]}{1 - v^2 (K_{a,v} + K_{a,h})/G_g}$$

ergebende Werte in Ansatz gebracht sind, wobei in dieser Beziehung mit
$\psi$ der Hinterachslastanteil
$\chi$ die radstandsbezogene Schwerpunktshöhe des Fahrzeuges
$K_{av}$ der Luft-Auftriebs- bzw. -Abtriebskoeffizient
an der Vorderachse
$K_{a,h}$ der Luft-Auftriebs- bzw. -Abtriebskoeffizient an der Hinterachse,
$\mu_b$ der Kraftschlußbeiwert und mit $G_g$ das Fahrzeuggewicht bezeichnet sind, daß eine Sensor-Einrichtung (34) vorgesehen ist, die bei einer Bremsung ein für den Momentanwert der Vorderachs-Bremskraft $F_{BV}$ charakteristisches Signal erzeugt, und daß die Bremskraft-Steuereinrichtung (33) die Hinterachs-Bremskraft $F_{BH}$ der Vorderachs-Bremskraft $F_{BV}$ gemäß der Beziehung

$$F_{BH} = DB_{om} \cdot F_{BV}$$

nachführt.

5. Bremsanlage nach Anspruch 4, **dadurch gekennzeichnet**, daß die Vorderradbremsen (11,12) an den Primär-Ausgangsdruckraum (56) und die Hinterradbremsen (13,14) an den Sekundär-Ausgangsdruckraum (57) des Tandem-Hauptzylinders (16") angeschlossen sind, daß die die gehäusefeste Begrenzung des Sekundärausgangsdruckraumes (57) bildende Bohrungsstufe (63) des Gehäuses (64), innerhalb derer durch einen äußeren Kolbenflansch (74) des Sekundärkolbens (59) der Sekundär-Ausgangsdruckraum (57) gegen einen - drucklos gehaltenen - Nachlaufraum (82) abgegrenzt ist und dieser durch einen inneren Kolbenflansch (73) gegen einen inneren Abschnitt dieser Bohrungsstufe (63) beweglich abgedichtet ist, durch eine Zwischenwand (68) des Gehäuses (64) gegen eine zentrale Bohrungsstufe (66) abgegrenzt ist, die von der den Primärkolben (58) aufnehmenden Bohrungsstufe (61) ausgeht, deren Querschnittsfläche $A_1$ etwas größer ist als die Querschnittsfläche $A_3$ der zentralen Bohrungsstufe (66), daß in der zentralen Bohrungsstufe (66) ein Betätigungskolben (69) druckdicht verschiebbar geführt ist, der die axial bewegliche - innere - Begrenzung des Primär-Ausgangsdruckraumes (56) bildet und diesen gegen einen drucklosen, axial gehäusefest durch die Zwischenwand (68) begrenzten Nachlaufraum (86) abgrenzt, daß dieser Betätigungskolben (69) mit einem den zentralen Nachlaufraum (86) axial durchsetzenden Stößel (71) versehen ist, der druckdicht verschiebbar durch eine zentrale Bohrung (72) der Zwischenwand (68) hindurchtritt und axial an dem inneren Kolbenflansch (73) des Sekundärkolbens (59) abstützbar ist, und daß der durch den inneren Kolbenflansch (73) des Sekundärkolbens (59) axial beweglich und durch die Zwischenwand (68) axial gehäusefest begrenzte, von dem Stößel (71) ebenfalls zentral durchsetzte Ringraum (96) an den Druckausgang (32) der steuerbaren Druckquelle (33) angeschlossen ist.

6. Bremsanlage nach Anspruch 5, **dadurch gekennzeichnet**, daß der am Sekundärkolben (39) angreifende Endabschnitt (71') des Stößels (71) des Betätigungskolbens (69) in einer Sackbohrung (88) des Sekundärkolbens (59) relativ zu diesem druckdicht verschiebbar angeordnet und am Grund (91) dieser Sackbohrung (88) abstützbar ist.

7. Bremsanlage nach Anspruch 6, **dadurch gekennzeichnet**, daß der innere Kolbenflansch (73) des Sekundärkolbens (59) mit einer zentral am Grund (91) der Sackbohrung (88) in diese mündenden und diese mit dem Nachlaufraum (82) verbindenden Ausgleichsbohrung (92) versehen ist.

8. Bremsanlage nach einem der Ansprüche 3 bis 7, **gekennzeichnet durch** eine im Sinne einer Festabstimmung getroffene Auslegung des Bremsgeräts und der Querschnitte der Radbremszylinder auf im gesamten Bremsbereich - Teil- und Vollbremsbereich - stabiles dynamisches Bremsverhalten dessen Fahrzeuges.

9. Bremsanlage nach einem der Ansprüche 1 bis 8, **dadurch gekennzeichnet**, daß der Ausgangsdruck der steuerbaren Druckquelle (33) durch Steuerung der Drehzahl eines elektrischen Antriebsmotors (41) einer Hochdruckpumpe (39) einstellbar ist.

10. Bremsanlage nach einem der Ansprüche 1 bis 8, **dadurch gekennzeichnet**, daß im Rahmen der elektronisch steuerbaren Bremsdruckquelle (33) ein auf hohem Ausgangsdruckniveau arbeitendes Druckversorgungsaggregat, insbesondere eine mit konstant hoher Drehzahl angetriebene Pumpe (39) oder ein auf hohem Druckniveau gehaltener Druckspeicher vorgesehen ist, und daß die Hinterradbremsen (13,14) über diesen einzeln oder gemeinsam zugeordnete, gepulst ansteuerbare Einlaß- und Auslaßventile (52,53) an den Druckausgang (42) des Druckversorgungsaggregates oder den drucklosen Vorratsbehälter (43) anschließbar bzw. gegen diese absperrbar sind.

11. Bremsanlage nach einem der Ansprüche 1 bis 10, **dadurch gekennzeichnet**, daß zur Bremsdrucküberwachung in den Vorderradbremsen (11,12) mindestens ein Druckgeber (34) vorgesehen ist, der ein für den in mindestens eine der Vorderradbremsen (11 und/oder 12) einkoppelbaren Ausgangsdruck des Bremsgeräts (16;16';16'') charakteristisches Ausgangssignal erzeugt und/oder ein Positionsgeber, der als Maß für den Ausgangsdruck des Bremsgeräts ein für die Pedalstellung oder die Position des mittels des Bremspedals (17) verschiebbaren Bremsgerätkolbens charakteristisches Ausgangssignal erzeugt.

12. Bremsanlage nach einem der Ansprüche 1 bis 11, **dadurch gekennzeichnet**, daß ein zur Istwert-Erfassung des in die Hinterradbremsen (13,14) eingekoppelten Druckes $p_h$ vorgesehener Druckgeber (48) an den Druckausgang (32) der steuerbaren Druckquelle (33) angeschlossen ist.

13. Bremsanlage nach einem der Ansprüche 1 bis 12, **dadurch gekennzeichnet**, daß im Rahmen der elektronisch steuerbaren Druckquelle (33) oder der elektronischen Steuereinheit einer Antriebs-Schlupf-Regeleinrichtung oder eines Antiblockiersystems, mit der/dem das Fahrzeug ebenfalls ausgerüstet ist, eine Rechnerstufe vorgesehen ist, die aus einer fortlaufenden Auswertung für die Radumfangsge-schwindigkeiten ($v_{ant}$) und ($v_f$) mindestens eines angetriebenen und eines frei laufenden Fahrzeugrades charakteristischer Daten ein für die Größe (d$\lambda_a$/d$\bar{z}$), in der mit ($\lambda_a$) der Antriebsschlupf des Fahrzeuges bezeichnet ist, welcher durch die Beziehung

$$\lambda_a = (v_{ant} - v_f)/v_{ant}$$

gegeben ist und mit $\bar{z}$ die Fahrzeuglängsbeschleunigung bezeichnet ist, charakteristisches Signal bildet und für Werte dieser Größe d$\lambda_a$/d$\bar{z}$, die innerhalb eines Variationsbereiches zwischen 0,4 und 0,6 liegen, aus dem mit diesem verknüpften Werten der Fahrzeuglängsbeschleunigung z gemäß der Beziehung

$$\mu_B = \bar{Z}/(\psi - \bar{Z}\chi)$$

den Kraftschlußbeiwert $\mu_B$ ermittelt, der für die Bestimmung des optimalen Hinterachsbremskraftanteils $\phi_{om}$ bzw. des optimierten Bremskraft-Verteilungsfaktors DB$_{om}$ durch die Rechnerstufe (47) in Ansatz gebracht wird.

**14.** Bremsanlage nach einem der Ansprüche 1 bis 13, für ein Fahrzeug, das auch mit einem auf stabiles dynamisches Verzögerungsverhalten ausgelegten Antiblockiersystem ausgerüstet ist, **dadurch gekennzeichnet**, daß als für die Bestimmung des optimalen Bremskraft-Verteilungsfaktors DB$_{om}$ ausgenutzter Kraftschlußbeiwert $\mu_B$ die bei einem Ansprechen der Antiblockierregelung an sämtlichen Fahrzeugrädern sich einstellende, auf die Erdbeschleunigung g (g = 9,81 m/s$^2$) bezogene Fahrzeugverzögerung Z$_{ABS}$ in Ansatz gebracht wird.

**15.** Bremsanlage nach einem der Ansprüche 1 bis 14, **dadurch gekennzeichnet**, daß das Fahrzeug mit einem Längsbeschleunigungssensor ausgerüstet ist, der für die am Fahrzeug auftretenden Beschleunigungen und/oder Verzögerungen charakteristische elektrische Ausgangssignale erzeugt.

**Claims**

**1.** Brake system with variable front/rear axle braking force distribution for a vehicle designed for high speeds, in particular a racing car, in which the downward aerodynamic forces lead to an increase in the axle loads with increasing vehicle speed (v), which increase is greater at the rear axle than at the front axle, the design of the wheel brakes and of a brake unit, which can be actuated by means of a brake pedal and which is provided for generating at least the brake pressure (p$_v$) which can be connected into the front wheel brakes, being effected in such a way that in the case of a specified defined limiting value of the actuation force exerted by the driver, the magnitude of the vehicle deceleration corresponding to the complete employment of the frictional force on the braked vehicle wheels can be achieved, characterized in that as part of a device for automatic control of the front/rear axle braking force distribution, a separate pressure source (33) is provided in which the outlet pressure can be set and which can be directly connected as the brake pressure into piston pairs (30; 30') of brake calipers (26, 27; 26', 27') of the rear wheel brakes (13, 14) of the vehicle, in that this pressure source (33) includes an electronic control unit (47) which, by processing at least one signal representing the vehicle speed (v) and one at least adjustably specifiable magnitude of the friction coefficient ($\mu_B$) which is present at the vehicle wheels or which is assumed to be present and is set, continuously forms a required value (DB$_{om}$) of an optimized braking force distribution factor in accordance with a linear relationship

$$DB_{om} = k_1 + k_2 \cdot \mu_B + k_3 \cdot v$$

in which k$_1$, k$_2$ and k$_3$ are constants which are specific to the vehicle and which are determined as interpolation constants from a linear interpolation of the way in which DB$_{om}$ depends on v and $\mu_B$, where DB$_{om}$ is itself determined in accordance with the relationship

$$DB_{om} = \frac{\phi_{om}}{1 - \phi_{om}}$$

for different values of an optimized rear axle braking force proportion $\phi_{om}$, with different values being applied for $\phi_{om}$, these values being determined from a numerical evaluation of the relationship

$$\emptyset_{om} = \frac{\psi - K_{a,h} \cdot v^2/G_g - \mu_B \cdot \chi \left[ 1 - v^2 (K_{a,v} + K_{a,h})/G_g \right]}{1 - v^2 (K_{a,v} + K_{a,h})/G_g}$$

in which relationship

$\psi$ represents the rear axle load proportion

$\chi$ represents the height of the vehicle centre of gravity referred to the wheel base

$K_{av}$ represents the aerodynamic upward or downward force coefficient at the front axle

$K_{a,h}$ represents the aerodynamic upward or downward force coefficient at the rear axle,

$\mu_B$ represents the coefficient of friction and

$G_g$ represents the vehicle weight,

in that a sensor device (34) is provided which, during a braking operation, generates a signal characteristic of the instantaneous value of the front axle braking force $F_{BV}$, and in that the braking force control device (33) causes the rear axle braking force $F_{BH}$ to follow up the front axle braking force $F_{BV}$ in accordance with the relationship

$$F_{BH} = DB_{om} \cdot F_{BV}.$$

2. Brake system according to Claim 1, with front/rear axle brake circuit division, the front wheel brakes (11, 12) being jointly connected to an outlet pressure space of the brake unit in which static pressure can be generated as a brake pressure $p_V$ by actuation of the brake pedal, characterized in that the rear wheel brakes (13, 14) can be acted on exclusively by the outlet pressure of the controllable pressure source (33), and in that this outlet pressure $p_h$ is caused to follow up the front axle brake pressure $p_V$ in accordance with the relationship

$$p_h = DB_{om} \cdot p_V \cdot r_{dyn,h}/r_{dyn,v}$$

the dynamic rolling radius of the rear wheels being represented by $r_{dyn,h}$ and the dynamic rolling radius of the front wheels of the vehicle being represented by $r_{dyn,v}$.

3. Brake system according to Claim 2 for a vehicle with front/rear axle brake circuit division and a tandem main cylinder, as the brake unit, with an outlet pressure space associated with the front wheel brakes and an outlet pressure space associated with the rear wheel brakes, characterized in that the rear wheel brakes (13, 14) have four-piston calipers (26, 27) of the same design, each with two piston pairs (30, 31) of the same or different dimensions, the piston pairs (30, 31) of one brake caliper (26 or 27) being connected together with one identically dimensioned piston pair (30, 31) of the other brake caliper (27 or 26) by means of a common brake conduit (23', 23), one brake conduit (23) being connected to the pressure outlet (21), of the brake unit (16), associated with the rear wheel brakes (13, 14) and the other brake conduit (23') being connected to the pressure outlet (32) of the controllable pressure source (33).

4. Brake system with variable front/rear axle braking force distribution for a vehicle designed for high speeds, in particular a racing car, in which the downward aerodynamic forces lead to an increase in the axle loads with increasing vehicle speed (v), which increase is greater at the rear axle than at the front axle, the design of the wheel brakes and a brake unit, which can be actuated by means of a brake pedal and which is provided for generating at least the brake pressure $(p_v)$ which can be connected into the front wheel brakes, being effected in such a way that in the case of a specified defined limiting value of the actuation force exerted by the driver, the magnitude of the vehicle deceleration corresponding to the complete employment of the frictional force on the braked vehicle wheels can be achieved, characterized in that as part of a device for automatic control of the front/rear axle braking force distribution, a separate pressure source (33) is provided with an electrically controllable outlet pressure which can be connected into a control pressure space (96) of the brake unit (16'') and, by this means, is additively superimposed on the brake pressure which can be generated by pedal actuation alone of the brake unit (16'') and which is connected into the rear wheel brakes (13, 14), in that the pressure source (33) includes an electronic control unit (47) which, by processing at least one signal representing the vehicle speed (v) and one at least adjustably specifiable magnitude of the friction coefficient ($\mu_B$) which is present at the vehicle wheels or which is assumed to be present and is set, continuously forms a required value ($DB_{om}$) of an optimized braking force distribution factor in accordance with a linear relationship

$$DB_{om} = k_1 + k_2 \cdot \mu_B + k_3 \cdot v$$

in which $k_1$, $k_2$ and $k_3$ are constants which are specific to the vehicle and which are determined as interpolation constants from a linear interpolation of the way in which $DB_{om}$ depends on v and $\mu_B$, where $DB_{om}$ is itself determined in accordance with the relationship

$$DB_{om} = \frac{\phi_{om}}{1 - \phi_{om}}$$

for different values of an optimized rear axle braking force proportion $\phi_{om}$, with different values being applied for $\phi_{om}$, these values being determined from a numerical evaluation of the relationship

$$\phi_{om} = \frac{\psi - K_{a,h} \cdot v^2/G_g - \mu_B \cdot \chi \left[1 - v^2(K_{a,v} + K_{a,h})/G_g\right]}{1 - v^2(K_{a,v} + K_{a,h})/G_g}$$

in which relationship

$\psi$ represents the rear axle load proportion

$\chi$ represents the height of the vehicle centre of gravity referred to the wheel base

$K_{a,v}$ represents the aerodynamic upward force or downward force coefficient at the front axle

$K_{a,h}$ represents the aerodynamic upward or downward force coefficient at the rear axle,

$\mu_B$ represents the coefficient of friction and

$G_g$ represents the vehicle weight,

in that a sensor device (34) is provided which, during a braking operation, generates a signal characteristic of the instantaneous value of the front axle braking force $F_{BV}$, and in that the braking force control device (33) causes the rear axle braking force $F_{BH}$ to follow up the front axle braking force $F_{BV}$ in accordance with the relationship

$$F_{BH} = DB_{om} \cdot F_{BV}.$$

5. Brake system according to Claim 4, characterized in that the front wheel brakes (11, 12) are connected to the primary outlet pressure space (56) and the rear wheel brakes (13, 14) are connected to the secondary outlet pressure space (57) of the tandem main cylinder (16''), in that the bore step (63), of the housing (64), which forms the boundary fixed to the housing of the secondary outlet pressure space (57) is bounded within the bore step (63) by an outer piston flange (74) of the secondary piston (59) relative to a follow-up space (82) - kept unpressurized - and this follow-up space (82) is movably sealed by an inner piston flange (73) against an inner section of this bore step (63), is bounded by an intermediate wall (68) of the housing (64) against a central hole step (66) which starts from the bore step (61) accommodating the primary piston (58), the cross-sectional area $A_1$ of the bore step (61) being somewhat larger than the cross-sectional area $A_3$ of the central bore step (66), in that an actuating piston (69) is guided so that it can be displaced in a pressure-tight manner in the central bore step (66), which actuating piston (69) forms the axially movable - inner - boundary of the primary outlet pressure space (56) and bounds the latter against an unpressurized follow-up space (86) axially bounded by the intermediate wall (68) connected to the casing, in that this actuating piston (69) is provided with a push-rod (71), which axially penetrates the central follow-up space (86), displaceably passes through a central hole (72) of the intermediate wall (68) in a pressure-tight manner and can be axially supported on the inner piston flange (73) of the secondary piston (59), and in that the annular space (96), which is bounded in an axially movable manner by the inner piston flange (73) of the secondary piston (59) and axially fixed relative to the housing by the intermediate wall (68) and which is likewise centrally penetrated by the push-rod (71), is connected to the pressure outlet (32) of the controllable pressure source (33).

6. Brake system according to Claim 5, characterized in that the end section (71'), acting on the secondary piston (39), of the push-rod (71) of the actuating piston (69) is displaceably arranged in a pocket hole (88) of the secondary piston (59) in a pressure-tight manner relative to the latter and can be supported on the bottom (91) of this pocket hole (88).

7. Brake system according to Claim 6, characterized in that the inner piston flange (73) of the secondary piston (59) is provided with a balance hole (92) opening into the pocket hole (88) centrally at its bottom (91) and connecting the pocket hole (88) to the follow-up space (82).

8. Brake system according to one of Claims 3 to 7, characterized by a design of the brake unit and of the cross-sections of the wheel brake cylinders with the object of a fixed matching for stable dynamic braking behaviour of its vehicle over the complete braking range - partial braking range and full braking range.

9. Brake system according to one of Claims 1 to 8, characterized in that the outlet pressure of the controllable pressure source (33) can be set by controlling the rotational speed of an electric drive motor (41) of a high-pressure pump (39).

10. Brake system according to one of Claims 1 to 8, characterized in that as part of the electronically controllable brake pressure source (33), a pressure supply unit, in particular a pump (39) driven with a constant high rotational speed or a pressure reservoir kept at a high pressure level, is provided and in that the rear axle brakes (13, 14) can be connected by means of these individually or jointly associated, pulse-controllable inlet and outlet valves (52, 53) to the pressure outlet (42) of the pressure supply unit or the unpressurized reservoir (43) or can be shut off from them.

11. Brake system according to one of Claims 1 to 10, characterized in that at least one pressure pick-up (34) is provided for brake pressure monitoring in the front wheel brakes (11, 12), which pressure pick-up (34) generates an output signal characteristic of the outlet pressure of the brake unit (16; 16'; 16") which can be connected into at least one of the front wheel brakes (11 and/or 12) and/or a position pick-up which generates, as a measure of the outlet pressure of the brake unit, an output signal characteristic of the pedal position or the position of the brake unit piston which can be displaced by means of the brake pedal (17).

12. Brake system according to one of Claims 1 to 11, characterized in that a pressure pick-up (48) provided for recording the actual value of the pressure $p_h$ connected into the rear wheel brakes (13, 14) is connected to the pressure outlet (32) of the controllable pressure source (33).

13. Brake system according to one of Claims 1 to 12, characterized in that as part of the electronically controllable pressure source (33) or the electronic control unit of a drive slip control device or an anti-lock brake system, with which the vehicle is likewise equipped, a computer stage is provided which, from a continuous evaluation of data characteristic of the wheel peripheral speeds $(v_{ant})$ and $(v_f)$ of at least one driven and one free-running vehicle wheel, forms a signal characteristic of the parameter $(d\lambda_a/d\bar{z})$ in which the drive slip of the vehicle is represented by $(\lambda_a)$, which is given by the relationship

$$\lambda_a = (v_{ant} - v_f)/v_{ant}$$

and the vehicle longitudinal acceleration is represented by $\bar{z}$ and, for values of this parameter $d\lambda_a/d\bar{z}$ which are located within a variation range between 0.4 and 0.6, determines the friction coefficient $\mu_B$ from the values, associated with this, of the vehicle longitudinal acceleration z in accordance with the relationship

EP 0 618 867 B1

$$\mu_B = \overline{Z}/(\psi - \overline{Z}_\chi)$$

the friction coefficient $\mu_B$ being applied by the computer stage (47) to determine the optimum rear axle braking force proportion $\phi_{om}$ and the optimized braking force distribution factor $DB_{om}$.

14. Brake system according to one of Claims 1 to 13 for a vehicle which is also equipped with an anti-lock brake system designed for stable dynamic deceleration behaviour, characterized in that the vehicle deceleration $Z_{ABS}$, referred to the gravitational constant g (g = 9.81 m/s$^2$) and occurring in the case of a response of the anti-lock brake system on all the vehicle wheels, is applied as the frictional force coefficient $\mu_B$ used for the determination of the optimum braking force distribution factor $DB_{om}$.

15. Brake system according to one of Claims 1 to 14, characterized in that the vehicle is equipped with a longitudinal acceleration sensor which generates electrical output signals characteristic of the accelerations and/or decelerations occurring on the vehicle.

**Revendications**

1. Dispositif de freinage avec répartition modifiable de la force de freinage sur l'essieu avant/arrière pour un véhicule conçu pour des vitesses élevées, notamment un véhicule de course pour lequel les forces aérodynamiques de déportance entraînent, avec une augmentation de la vitesse (v) du véhicule, une augmentation des charges sur l'essieu, augmentation qui est plus importante sur l'essieu arrière que sur l'essieu avant, la conception des freins de roue et d'un servofrein prévu pour pouvoir être actionné à l'aide d'une pédale de frein pour produire la pression de freinage ($p_V$) pouvant être couplée au moins dans les freins des roues avant, en ce que, dans le cas d'une valeur limite donnée de façon définie de la force de commande devant être exercée par le conducteur, la valeur absolue de la décélération du véhicule correspondant à l'utilisation totale de l'adhérence au niveau des roues freinées du véhicule, dispositif caractérisé en ce que, dans le cadre d'un système pour une commande automatique de la répartition de la force de freinage sur l'essieu avant/arrière, il est prévu une source de pression (33) séparée, avec une pression de sortie pouvant être régulée, qui peut être couplée directement comme pression de freinage dans des paires de pistons (30 ; 30') d'étriers de frein (26, 27 ; 26', 27') des freins des roues arrière (13, 14) du véhicule, en ce que cette source de pression (33) comprend une unité de commande électronique (47) laquelle, à partir d'un traitement d'au moins un signal représentant la vitesse (v) du véhicule, ainsi qu'au moins d'une valeur réglable, pouvant être prédéfinie, du coefficient d'adhérence ($\mu_B$) s'appliquant aux roues du véhicule ou considéré comme tel, et qui est réglée, constitue en continu une valeur théorique ($DB_{om}$) pour un coefficient optimisé de la répartition de la force de freinage selon une relation linéaire

$$DB_{om} = k_1 + k_2 \cdot \mu_B + k_3 \cdot v$$

où $k_1$, $k_2$ et $k_3$ sont des constantes spécifiques du véhicule qui sont calculées comme des constantes d'interpolation à partir d'une interpolation linéaire de la fonction v et $\mu_B$ de $DB_{om}$, lorsque ce coefficient de répartition est calculé suivant la relation

$$DB_{Om} = \frac{\phi_{om}}{1 - \phi_{om}}$$

pour différentes valeurs d'une part optimisée $\phi_{om}$ de la force de freinage sur l'essieu arrière et, ainsi, pour cette part optimisée, les différentes valeurs résultant d'une exploitation numérique de la relation

$$\phi_{Om} = \frac{\Psi - Ka_h \cdot v^2/Gg - \mu_B \cdot \chi [1 - v^2(Ka_v + Ka_h)/Gg]}{1 - v^2 (Ka_v + Ka_h) / Gg}$$

sont mises en équation où, dans cette équation, on désigne par

23

$\psi$            la part de la charge sur l'essieu arrière

$\chi$            la hauteur du centre de gravité du véhicule par rapport à l'empattement

$K_{a,v}$     le coefficient de portance ou de déportance de l'air sur l'essieu avant

$K_{a,h}$     le coefficient de portance ou de déportance de l'air sur l'essieu arrière

$\mu_B$         le coefficient d'adhérence et

$G_g$         la masse du véhicule

en ce qu'un dispositif à capteur (34) est prévu qui, en cas de freinage, produit un signal caractéristique pour la valeur instantanée de la force de freinage $F_{BV}$ de l'essieu avant, et en ce que le dispositif de commande (33) de la force de freinage asservit la force de freinage $F_{BH}$ de l'essieu arrière à la force de freinage $F_{BV}$ de l'essieu avant selon la relation

$$F_{BH} = DB_{om} \cdot F_{BV}$$

2.    Dispositif de freinage selon la revendication 1, avec répartition du circuit de freinage sur l'essieu avant/arrière, dans lequel les freins (11, 12) des roues avant sont reliés, ensemble, à un espace de pression de sortie du servofrein, dans lequel, en actionnant la pédale de frein, il est possible de produire de la pression statique en tant que pression de freinage $p_v$, caractérisé en ce que les freins (13, 14) des roues arrière ne peuvent être alimentés en pression que par la pression de sortie de la source de pression (33) pouvant être régulée, et en ce que cette pression de sortie $p_h$ est asservie à la pression de freinage $p_v$ de l'essieu avant, selon la relation

$$p_h = DB_{om} \cdot p_v \cdot r_{dyn,h} \, / \, r_{dyn,v}$$

où $r_{dyn,h}$ désigne le rayon de roulement dynamique des roues arrière et où $r_{dyn,v}$ désigne le rayon de roulement dynamique des roues avant du véhicule.

3.    Dispositif de freinage selon la revendication 2 pour un véhicule équipé d'un circuit de répartition de freinage sur l'essieu avant/arrière et d'un maîtrecylindre en tandem servant de servofrein, avec un espace de pression de sortie associé aux freins des roues avant et d'un espace de pression de sortie associé aux freins des roues arrière, caractérisé en ce que les freins (13, 14) des roues arrière ont des étriers (26, 27) à quatre pistons de même conception, comportant chacun deux paires de pistons (30, 31) de dimensionnement identique ou différent, dans lequel les paires de pistons (30, 31) d'un étrier de frein (26 ou 27), toujours reliées aux paires de pistons (30, 31) de l'autre étrier de frein (27 ou 26) et dimensionnées de façon toujours identique, sont couplées entre elles via une conduite de frein commune (23', 23), dispositif dans lequel l'une des conduites de frein (23) est raccordée à la sortie de pression (21) du servofrein (16) associée aux freins (13, 14) des roues arrière et l'autre conduite de frein (23') est raccordée à la sortie de pression (32) de la source de pression (33) pouvant être régulée.

4.    Dispositif de freinage avec répartition modifiable de la force de freinage sur l'essieu avant/arrière pour un véhicule conçu pour des vitesses élevées, notamment un véhicule de course pour lequel les forces aérodynamiques de déportance entraînent, avec une augmentation de la vitesse (v) du véhicule, une augmentation des charges sur l'essieu, augmentation qui est plus importante sur l'essieu arrière que sur l'essieu avant, la conception des freins de roue et d'un servofrein prévu pour pouvoir être actionné à l'aide d'une pédale de frein pour produire la pression de freinage ($p_v$) pouvant être couplée au moins dans les freins des roues avant, en ce que, dans le cas d'une valeur limite donnée de façon définie de la force de commande devant être exercée par le conducteur, la valeur absolue de la décélération du véhicule correspondant à l'utilisation totale de l'adhérence au niveau des roues freinées du véhicule, dispositif caractérisé en ce que, dans le cadre d'un système pour une commande automatique de la répartition de freinage sur l'essieu avant/arrière, il est prévu une source de pression (33) séparée, avec une pression de sortie pouvant être régulée électriquement, qui peut être couplée dans un espace de pression de commande (96) du servofrein (16'') et qui, de ce fait, est surajoutée à la pression de freinage couplée aux freins (13, 14) des roues arrière et pouvant être produite seulement en actionnant la pédale du servofrein (16''), en ce que la source de pression (33) comprend une unité de commande électronique (47) laquelle, à partir d'un traitement d'au moins un signal représentant la vitesse (v) du véhicule, ainsi qu'au moins d'une valeur réglable, pouvant être prédéfinie, du coefficient d'adhérence ($\mu_B$) s'appliquant aux roues du véhicule ou considéré comme tel, et qui est réglée, constitue en continu une valeur théorique ($DB_{om}$) pour un coefficient optimisé de la répartition de la force de freinage selon

une relation linéaire

$$DB_{om} = k_1 - k_2 \cdot \mu_B + k_3 \cdot v$$

où $k_1$, $k_2$ et $k_3$ sont des constantes spécifiques du véhicule qui sont calculées comme des constantes d'interpolation à partir d'une interpolation linéaire de la fonction v et $\mu_B$ de $DB_{om}$, lorsque ce coefficient de répartition est calculé suivant la relation

$$DB_{om} = \frac{\phi_{om}}{1 - \phi_{om}}$$

pour différentes valeurs d'une part optimisée $\phi_{om}$ de la force de freinage sur l'essieu arrière et, ainsi, pour cette part optimisée, les différentes valeurs résultant d'une exploitation numérique de la relation

$$\phi_{om} = \frac{\psi - K_{ah}.v^2/Gg - \mu B \cdot \chi [1 - v^2(K_{av} + K_{ah})/Gg]}{1 - v^2 (K_{av} + K_{ah}) / Gg}$$

sont mises en équation où, dans cette équation, on désigne par

$\psi$      la part de la charge sur l'essieu arrière
$\chi$      la hauteur du centre de gravité du véhicule par rapport à l'empattement
$K_{a,v}$      le coefficient de portance ou de déportance de l'air sur l'essieu avant
$K_{a,h}$      le coefficient de portance ou de déportance de l'air sur l'essieu arrière
$\mu_B$      le coefficient d'adhérence et
$G_g$      la masse du véhicule

en ce qu'un dispositif à capteur (34) est prévu qui, en cas de freinage, produit un signal caractéristique pour la valeur instantanée de la force de freinage $F_{BV}$ de l'essieu avant, et en ce que le dispositif de commande (33) de la force de freinage asservit la force de freinage $F_{BH}$ de l'essieu arrière à la force de freinage $F_{BV}$ de l'essieu avant selon la relation

$$F_{BH} = DB_{om} \cdot F_{BV}$$

5.      Dispositif de freinage selon la revendication 4, caractérisé en ce que les freins (11, 12) des roues avant sont raccordés à l'espace de pression de sortie primaire (56) et les freins (13, 14) des roues arrière sont raccordés à l'espace de pression de sortie secondaire (57) du maître-cylindre en tandem (16''), en ce que le palier d'alésage (63) du boîtier (64) formant la limitation fixée par le boîtier de l'espace de pression de sortie secondaire (57), à l'intérieur duquel, l'espace de pression de sortie secondaire (57) est délimité par une face extérieure de piston (74) du piston secondaire (59), contre un espace d'asservissement (82) maintenu exempt de pression, et celui-ci est rendu étanche, lorsqu'il est mobile, par une face intérieure de piston (73), contre un segment intérieur de ce palier d'alésage (63), espace délimité par une paroi intermédiaire (68) du boîtier (64) contre un palier central d'alésage (66) qui s'étend depuis le palier d'alésage (61) recevant le piston primaire (58), palier d'alésage dont la surface de section $A_1$ est un peu plus grande que la surface de section $A_3$ du palier central d'alésage (66), en ce que, dans le palier central d'alésage (66), un piston de commande (69) est guidé en coulissant de façon étanche à la pression, piston qui constitue la limite - intérieure - mobile axialement de l'espace de pression de sortie primaire (56), et délimite celui-ci contre un espace d'asservissement (86), exempt de pression, délimité axialement par rapport au boîtier, par la paroi intermédiaire (68), en ce que ce piston de commande (69) est pourvu d'un poussoir (71) traversant axialement l'espace central d'asservissement (86), poussoir qui traverse en coulissant de façon étanche à la pression un alésage central (72) de la paroi latérale (68) et qui vient en appui axialement sur la face intérieure du piston (73) du piston secondaire (59), et en ce que l'espace annulaire (96), délimité par la face intérieure du piston (73) du piston secondaire (59), mobile axialement, et par la paroi intermédiaire (68), axialement par rapport au boîtier, traversé également de façon centrale par le poussoir (71), est raccordé à la sortie de pression (32) de la source de pression (33) pouvant être régulée.

6. Dispositif de freinage selon la revendication 5, caractérisé en ce que le segment terminal (71'), agissant au niveau du piston secondaire (59), du poussoir (71) du piston de commande (69) est disposé dans un trou borgne (88) du piston secondaire (59) en coulissant par rapport à celui-ci et en étant étanche à la pression, et pouvant être en appui au fond (91) de ce trou borgne (88).

7. Dispositif de freinage selon la revendication 6, caractérisé en ce que la face intérieure du piston (73) du piston secondaire (59) est pourvue d'un contre-perçage (92), placé centralement au fond (91) du trou borgne (88), communiquant avec ce trou borgne et reliant celui-ci à l'espace d'asservissement (82).

8. Dispositif de freinage selon l'une quelconque des revendications 3 à 7, caractérisé par une conception adéquate, dans le sens d'une définition précise, du servofrein et des sections des cylindres de frein de roue s'appliquant au comportement stable et dynamique du véhicule pour l'ensemble de la plage de freinage, concernant à la fois la plage de freinage partiel et la plage de freinage maximum.

9. Dispositif de freinage selon l'une quelconque des revendications 1 à 8, caractérisé en ce que la pression de sortie de la source de pression (33) pouvant être régulée peut être réglée en régulant la vitesse d'un moteur d'entraînement électrique (41) d'une pompe haute pression (39).

10. Dispositif de freinage selon l'une quelconque des revendications 1 à 8, caractérisé en ce que, dans le cadre de la source de pression de freinage (33) pouvant être régulée électroniquement, il est prévu un système d'alimentation en pression fonctionnant à un niveau élevé de pression de sortie, notamment une pompe (39) entraînée à vitesse constante élevée ou un accumulateur hydraulique maintenu à un niveau élevé de pression, et en ce que les freins (13, 14) des roues arrière, via des soupapes d'admission et d'échappement (52, 53) associées de façon individuelle ou commune à ces éléments précédents et déclenchées par impulsion, peuvent être raccordés à la sortie de pression (42) du système d'alimentation en pression ou au réservoir (43) exempt de pression ou peuvent être isolés de ces soupapes.

11. Dispositif de freinage selon l'une quelconque des revendications 1 à 10, caractérisé en ce que pour le contrôle de la pression de freinage dans les freins (11, 12) des roues avant, il est prévu au moins un capteur de pression (34) qui produit un signal de sortie caractéristique pour la pression de sortie du servofrein (16 ; 16' ; 16'') pouvant être couplée au moins dans un des freins (11 et/ou 12) des roues avant et/ou prévoyant un capteur de position qui, en tant que mesure de la pression de sortie du servofrein, produit un signal de sortie caractéristique pour la position de la pédale ou pour la position du piston du servofrein coulissant au moyen de la pédale de frein (17).

12. Dispositif de freinage selon l'une quelconque des revendications 1 à 11, caractérisé en ce qu'un capteur de pression (48), prévu pour saisir la valeur réelle de la pression $p_h$ couplée dans les freins (13, 14) des roues arrière, est raccordé à la sortie de pression (32) de la source de pression (33) pouvant être régulée.

13. Dispositif de freinage selon l'une quelconque des revendications 1 à 12, caractérisé en ce que, dans le cadre de la source de pression (33) pouvant être régulée électroniquement ou de l'unité de commande électronique d'un régulateur du glissement en traction ou d'un système d'antiblocage dont le véhicule est également équipé, une phase de calcul est prévue qui, à partir d'une exploitation en continu pour les vitesses ($v_{ant}$) et ($v_f$) de circonférence de roue, au moins d'une roue entraînée et d'une roue libre du véhicule ayant des données caractéristiques, constitue un signal caractéristique pour la grandeur ($d\lambda_a/d\bar{z}$) dans laquelle le glissement en traction du véhicule est désigné par ($\lambda_a$), laquelle valeur de glissement est donnée par la relation

$$\lambda_a = (v_{ant} - v_f) / v_{ant}$$

et l'accélération longitudinale du véhicule est désignée par $\bar{z}$, et pour des valeurs de cette grandeur $d\lambda_a/d\bar{z}$ qui sont à l'intérieur d'une plage de variation comprise entre 0,4 et 0,6, plage à partir de laquelle on calcule le coefficient d'adhérence $\mu_B$ avec les valeurs liées à l'accélération longitudinale Z du véhicule selon la relation

# EP 0 618 867 B1

$$\mu_B = \overline{Z} / (\psi - \overline{Z}_\chi)$$

coefficient d'adhérence qui est mis en équation par la phase de calcul (47) pour déterminer la part optimale $\phi_{om}$ de la force de freinage sur l'essieu arrière ou le coefficient optimisé $DB_{om}$ de répartition de la force de freinage.

14. Dispositif de freinage selon l'une quelconque des revendications 1 à 13, pour un véhicule qui est équipé également avec un système d'antiblocage conçu pour un comportement stable et dynamique en décélération, caractérisé en ce que, lorsque le système asservi d'antiblocage est sollicité pour fonctionner sur la totalité des roues du véhicule, la vitesse de décélération relative $Z_{ABS}$ du véhicule, se réglant sur l'accélération terrestre g (g = 9,81 m/s$^2$), est mise en équation en tant que coefficient d'adhérence $\mu_B$ utilisé pour déterminer le coefficient optimal $DB_{om}$ de répartition de la force de freinage.

15. Dispositif de freinage selon l'une quelconque des revendications 1 à 14, caractérisé en ce que le véhicule est équipé d'un capteur d'accélération longitudinale qui produit des signaux de sortie électriques caractéristiques pour les accélérations et/ou les décélérations du véhicule.

27

Fig.1

EP 0 618 867 B1

**Fig. 2a**

$\emptyset_{om}$

0,6 —

0,5 —

$\mu_B = 1,0$

$\mu_B = 1,2$

$\mu_B = 1,5$

0,4 —

0,3 —

0,2 —

0,1 —

0 —

V [m/s]

0    20    40    60    80

**Fig. 2b**

$DB_{om}$

1,2 —

1,0 —

$\mu_B = 1,0$

$\mu_B = 1,2$

0,8 —

$\mu_B = 1,5$

0,6 —

0,4 —

0,2 —

0 —

V [m/s]

0    20    40    60    80

Fig. 3a

Fig. 3b

Fig. 4

Fig. 5

EP 0 618 867 B1

Fig. 5a

Fig.6